# EUROPÄISCHE PATENTSCHRIFT

(11) **EP 4 214 050 B1**
(45) Veröffentlichungstag und Bekanntmachung des Hinweises auf die Patenterteilung: **17.07.2024**
(21) Anmeldenummer: 21770017.8
(22) Anmeldetag: 02.09.2021
(51) Int. Cl.: B32B 17/10, G02B 27/01, B60J 1/02, C03C 17/36

(54) **PROJEKTIONSANORDNUNG FÜR EIN HEAD-UP-DISPLAY (HUD) MIT P-POLARISIERTER STRAHLUNG**
PROJECTION ASSEMBLY FOR A HEAD-UP DISPLAY (HUD) WITH P-POLARIZED RADIATION
DISPOSITIF DE PROJECTION POUR UN AFFICHAGE TÊTE HAUTE (HUD) À RAYONNEMENT P-POLARISÉ

(30) Priorität: 21.09.2020 EP 20197086
(43) Veröffentlichungstag der Anmeldung: 26.07.2023
(73) Patentinhaber: Saint-Gobain Glass France, 92400 Courbevoie (FR)
(72) Erfinder: DIGUET, Antoine, 75009 Paris (FR); HAGEN, Jan, 53123 Bonn (DE)
(74) Vertreter: SGR Germany-Patents
(86) Internationale Anmeldenummer: PCT/EP2021/074237
(87) Internationale Veröffentlichungsnummer: WO 2022/058178

(56) Entgegenhaltungen:
- CN-U- 204 143 067

## Beschreibung

Die Erfindung betrifft eine Projektionsanordnung für ein Head-Up-Display und ihre Verwendung.

Moderne Automobile werden in zunehmendem Maße mit sogenannten Head-Up-Displays (HUDs) ausgestattet. Mit einem Projektor, typischerweise im Bereich des Armaturenbretts, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

HUD-Projektoren werden überwiegend mit s-polarisierter Strahlung betrieben und bestrahlen die Windschutzscheibe mit einem Einfallswinkel von etwa 65%, was nahe dem Brewster-Winkel für einen Luft-Glas-Übergang liegt (56,5° für Kalk-Natron-Glas). Dabei tritt das Problem auf, dass das Projektorbild an beiden externen Oberflächen der Windschutzscheibe reflektiert wird. Dadurch tritt neben dem gewünschten Hauptbild auch ein leicht versetztes Nebenbild auf, das sogenannte Geisterbild ("Ghost"). Das Problem wird üblicherweise dadurch gemindert, dass die Oberflächen in einem Winkel zueinander eingeordnet werden, insbesondere durch Verwendung einer keilartigen Zwischenschicht zur Lamination der als Verbundscheibe ausgebildeten Windschutzscheiben, so dass Hauptbild und Geisterbild einander überlagert werden. Verbundgläser mit Keilfolien für HUDs sind beispielsweise aus WO2009/071135A1, EP1800855B1 oder EP1880243A2 bekannt.

Die Keilfolien sind kostspielig, so dass die Herstellung einer solchen Verbundscheibe für ein HUD recht kostenintensiv ist. Es besteht daher Bedarf an HUD-Projektionsanordnungen, die mit Windschutzscheiben ohne Keilfolien auskommen. So ist es beispielsweise möglich, den HUD-Projektor mit p-polarisierter Strahlung zu betreiben, welche an den Scheibenoberflächen nicht wesentlich reflektiert wird. Als Reflexionsfläche für die p-polarisierte Strahlung weist die Windschutzscheibe stattdessen eine Reflexionsbeschichtung auf. Die DE102014220189A1 offenbart eine solche HUD-Projektionsanordnung, welche mit p-polarisierter Strahlung betrieben wird. Als reflektierende Struktur wird unter anderem eine einzelne metallische Schicht vorgeschlagen mit einer Dicke von 5 nm bis 9 nm, beispielsweise aus Silber oder Aluminium. Auch die WO2019046157A1 offenbart ein HUD mit p-polarisierter Strahlung, wobei eine Reflexionsbeschichtung mit mindestens zwei metallischen Schichten verwendet wird.

US2017242247A1 offenbart eine weitere HUD-Projektionsanordnung mit einer Reflexionsbeschichtung für p-polarisierte Strahlung. Die Reflexionsbeschichtung kann eine oder mehrere leitfähige Silberschichten enthalten, darüber hinaus dielektrische Schichten. Das Reflexionsspektrum weist im relevanten Spektralbereich aber eine deutlich gekrümmte Form auf, so dass der Reflexionsgrad relativ stark wellenlängenabhängig ist. Dies ist nachteilhaft im Hinblick auf eine farbneutrale Darstellung der HUD-Projektion.

In CN204143067U wird eine HUD-Projektionsanordnung aus einer Lichtquelle für p-polarisiertes Licht und einer Verbundscheibe beschrieben, wobei die Verbundscheibe eine transparente Schicht aufweist, die mindestens zwei dielektrische Schichten und mindestens eine metallische Schicht umfasst.

Es besteht Bedarf an Projektionsanordnungen für HUDs mit Reflexionsbeschichtungen, die eine hohe Transmission im sichtbaren Spektralbereich gewährleisten sowie eine hohe Reflektivität gegenüber p-polarisierter Strahlung aufweisen und eine farbneutrale Darstellung erlauben. Neben diesen spezifischen Anforderungen im Projektionsbereich des HUD sind zusätzlich insbesondere außerhalb des HUD-Bereichs eine möglichst niedrige Transmission von Infrarotstrahlung und für einen Betrachter günstige Reflektionseigenschaften im sichtbaren Bereich des Lichtspektrums erwünscht. Der vorliegenden Erfindung liegt die Aufgabe zugrunde, eine solche verbesserte Projektionsanordnung bereitzustellen.

Die Aufgabe der vorliegenden Erfindung wird erfindungsgemäß durch eine Projektionsanordnung gemäß Anspruch 1 gelöst. Bevorzugte Ausführungen gehen aus den Unteransprüchen hervor.

Die erfindungsgemäße Projektionsanordnung für ein Head-Up-Display (HUD) umfasst mindestens eine Verbundscheibe mit einer elektrisch leitfähigen Beschichtung und einen Projektor, der überwiegend p-polarisierte Strahlung erzeugt und der auf den HUD-Bereich gerichtet ist. Die Verbundscheibe umfasst eine Außenscheibe und eine Innenscheibe, die über eine thermoplastische Zwischenschicht miteinander verbunden sind. Die elektrisch leitfähige Beschichtung gliedert sich in einen ersten Flächenbereich, der innerhalb des HUD-Bereichs liegt und einen zweiten Flächenbereich, der außerhalb des HUD-Bereichs liegt. Innerhalb des ersten Flächenbereichs weist die elektrisch leitfähige Beschichtung dabei mindestens einen Teilbereich auf, in dem die elektrisch leitfähige Beschichtung aus in dieser Reihenfolge einer ersten dielektrischen Schicht oder Schichtenfolge, einer elektrisch leitfähigen Schicht auf Basis von Silber und einer zweiten dielektrischen Schicht oder Schichtenfolge besteht und geeignet ist, p-polarisierte Strahlung zu reflektieren. Die elektrisch leitfähige Beschichtung innerhalb des zweiten Flächenbereichs weist mindestens einen Teilbereich auf, in dem die elektrisch leitfähige Beschichtung in dieser Reihenfolge mindestens eine erste dielektrische Schicht oder Schichtenfolge, eine erste elektrisch leitfähige Schicht auf Basis von Silber, eine zweite dielektrische Schicht oder Schichtenfolge, eine zweite elektrisch leitfähige Schicht auf Basis von Silber und eine dritte dielektrische Schicht oder Schichtenfolge umfasst. Die elektrisch leitfähige Beschichtung im ersten Flächenabschnitt innerhalb des HUD-Bereichs ist dabei mittels subtraktiver Verfahren aus der elektrisch leitfähigen Beschichtung im zweiten Flächenabschnitt erhältlich.

Die erfindungsgemäße Verbundscheibe verfügt erfindungsgemäß in mindestens einem Teilbereich innerhalb des zweiten Flächenbereichs über eine elektrisch leitfähige Beschichtung umfassend mindestens zwei elektrisch leitfähige Schichten basierend auf Silber. Derartige Beschichtungen mit zwei funktionalen Silberschichten hemmen vorteilhaft die Transmission infraroter Strahlung durch die Verbundscheibe. Dadurch kann eine unerwünschte Erwärmung eines Fahrzeuginnenraums durch zu hohe solare Transmission vermieden werden. Darüber hinaus lässt sich mittels elektrisch leitfähiger Beschichtungen mit mindestens zwei funktionalen Silberschichten ein verbessertes optisches Erscheinungsbild der Verbundscheibe erreichen. Schichtaufbauten mit nur einer funktionalen Silberschicht zeigen unter Umständen eine unerwünscht starke Reflektion an der im Einbauzustand der Verbundscheibe der Umgebung zugewandten Oberfläche der Scheibe. Dies wird bei der erfindungsgemäß im zweiten Flächenbereich außerhalb des HUD-Bereichs vorliegenden elektrisch leitfähigen Beschichtung vermieden.

Im ersten Flächenbereich der elektrisch leitfähigen Beschichtung, der innerhalb des HUD-Bereichs der Verbundscheibe angeordnet ist, liegt in zumindest einem Teilbereich lediglich eine Beschichtung umfassend eine einzige funktionale silberbasierte Schicht, also eine elektrisch leitfähige Schicht auf Basis von Silber, vor. Diese ist geeignet p-polarisierte Strahlung zu reflektieren. Die elektrisch leitfähige Beschichtung im ersten Flächenbereich ist mittels subtraktiver Verfahren aus der elektrisch leitfähigen Beschichtung im zweiten Flächenbereich erhältlich. Im ersten Flächenbereich umfasst der Schichtstapel der elektrisch leitfähigen Beschichtung somit einen Teil des Flächenquerschnitts der elektrisch leitfähigen Beschichtung im zweiten Flächenbereich, wobei im zweiten Flächenbereich weitere Schichten vorliegen, die über den Schichtstapel des ersten Flächenbereichs hinausgehen. Auf diese Weise kann im HUD-Bereich eine elektrisch leitfähige Beschichtung vorgesehen werden, die insbesondere für die Reflektion p-polarisierten Lichtes optimiert ist, während im zweiten Flächenbereich außerhalb des HUD-Bereichs eine Beschichtung vorliegt, die den davon abweichenden Anforderungen an eine auch großflächig auf einer Verbundscheibe zu verwendende Beschichtung entspricht. Der in Abschnitten übereinstimmende Schichtstapel der elektrisch leitfähigen Beschichtung innerhalb des ersten Flächenbereichs und innerhalb des zweiten Flächenbereichs erleichtert dabei die Herstellung der Verbundscheibe.

Erfindungsgemäß ist der Schichtstapel im ersten Flächenbereich mittels subtraktiver Verfahren aus dem Schichtstapel der elektrisch leitfähigen Beschichtung im zweiten Flächenbereich erhältlich. Das Merkmal, dass die elektrisch leitfähige Beschichtung im ersten Flächenbereich aus der Beschichtung im zweiten Flächenbereich erhältlich ist, bezieht sich dabei auf die Zusammensetzung und Schichtabfolge der elektrisch leitfähigen Beschichtung und nicht auf den Herstellungsprozess der Beschichtung. Somit ist entscheidend, dass bei Betrachtung des Schichtstapels der elektrisch leifähigen Beschichtung im zweiten Flächenbereich ein Teil des Schichtstapels hinweggedacht werden kann und sich daraus der Schichtstapel der elektrisch leitfähigen Beschichtung im ersten Flächenbereich ergibt. Unwesentlich ist dabei ob subtraktive Verfahren genutzt wurden um den Schichtstapel der elektrisch leitfähigen Beschichtung im ersten Flächenbereich zu erhalten oder ob die Beschichtung in beiden Flächenbereichen unabhängig voneinander mittels additiver Verfahren aufgebracht wurde.

Erfindungsgemäß wird p-polarisierte Strahlung zur Erzeugung des HUD-Bildes verwendet und die Verbundscheibe weist eine elektrisch leitfähige Beschichtung auf, welche p-polarisierte Strahlung hinreichend reflektiert. Da der für HUD-Projektionsanordnungen typische Einfallswinkel von etwa 65° dem Brewsterwinkel für einen Luft-Glas-Übergang (56,5°, Kalk-Natron-Glas) relativ nahekommt, wird p-polarisierte Strahlung von den Scheibenoberflächen kaum reflektiert, sondern hauptsächlich von der leitfähigen Beschichtung. Geisterbilder treten daher nicht oder kaum wahrnehmbar auf, so dass auf die Verwendung einer kostspieligen Keilfolie verzichtet werden kann. Außerdem ist das HUD-Bild auch für Träger von polarisationsselektiven Sonnenbrillen erkennbar, welche typischerweise nur p-polarisierte Strahlung passieren lassen und s-polarisierte Strahlung blocken. Die elektrisch leitfähige Beschichtung im ersten Flächenbereich weist eine hohe Reflektivität gegenüber p-polarisierter Strahlung im Spektralbereich von 450 nm bis 650 nm auf, der für HUD-Darstellungen relevant ist (HUD-Projektoren arbeiten typischerweise mit den Wellenlängen 473 nm, 550 nm und 630 nm (RGB)). Dadurch wird ein intensitätsstarkes HUD-Bild erreicht. Die einzelne Silberschicht setzt die Lichttransmission nicht übermäßig herab, so dass die Scheibe auch als Windschutzscheibe verwendet werden kann. Das erfindungsgemäße Verhältnis der optischen Dicken der oberen und unteren dielektrischen Schichtenfolge bewirkt eine Glättung des Reflexionsspektrums, so dass eine farbneutrale Darstellung gewährleistet ist. Die vorteilhaften Reflexionseigenschaften, insbesondere die Gleichmäßigkeit des Spektrums, erstrecken sich sogar über den HUD-relevanten Spektralbereich hinaus auf einen Spektralbereich von 400 nm bis 680 nm, so dass neben einer guten HUD-Darstellung auch im ersten Flächenbereich ein guter Gesamteindruck der Scheibe erreicht wird ohne störenden Farbstich. Das sind große Vorteile der vorliegenden Erfindung.

Die erfindungsgemäße Projektionsanordnung für ein Head-Up-Display (HUD) umfasst mindestens eine Verbundscheibe die mit einer elektrisch leitfähigen Beschichtung versehen ist, und einen Projektor. Wie bei HUDs üblich bestrahlt der Projektor einen Bereich der Verbundscheibe, wo die Strahlung in Richtung des Betrachters (im Falle einer Verbundscheibe als Fahrzeugwindschutzscheibe: Fahrers) reflektiert wird, wodurch ein virtuelles Bild erzeugt wird, welches der Betrachter von ihm aus gesehen hinter der Verbundscheibe wahrnimmt. Der durch den Projektor bestrahlbare Bereich der Verbundscheibe wird als HUD-Bereich bezeichnet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die Verbundscheibe umfasst eine Außenscheibe und eine Innenscheibe, die über eine thermoplastische Zwischenschicht miteinander verbunden sind. Die Verbundscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Fahrzeuginnenraum zugewandte Scheibe der Verbundscheibe bezeichnet. Mit Außenscheibe wird die der äußeren Umgebung zugewandte Scheibe bezeichnet. Die Verbundscheibe ist bevorzugt die Windschutzscheibe oder Dachscheibe eines Kraftfahrzeugs, insbesondere eines Personen- oder Lastkraftwagens.

Die Verbundscheibe in ihrer Ausführungsform als Windschutzscheibe weist eine Oberkante und eine Unterkante auf sowie zwei dazwischen verlaufende Seitenkanten. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Die Außenscheibe und die Innenscheibe weisen jeweils eine außenseitige und eine innenraumseitige Oberfläche auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Der Projektor ist auf den HUD-Bereich der Verbundscheibe gerichtet. Die Strahlung des Projektors ist überwiegend p-polarisiert. Die Reflexionsbeschichtung ist geeignet, p-polarisierte Strahlung zu reflektieren. Dadurch wird aus der Projektorstrahlung ein virtuelles Bild erzeugt, welches der Betrachter von ihm aus gesehen hinter der Verbundscheibe wahrnehmen kann. So wird im Falle einer erfindungsgemäßen Verbundscheibe als Windschutzscheibe das virtuelle Bild vom Fahrer des Fahrzeugs als auf der Straße befindlich wahrgenommen.

Die elektrisch leitfähige Beschichtung umfasst einen ersten Flächenbereich und einen zweiten Flächenbereich. Der erste Flächenbereich der elektrisch leitfähigen Beschichtung liegt innerhalb des HUD-Bereichs der Verbundscheibe. Demnach handelt es sich um den Bereich der elektrisch leitfähigen Beschichtung, auf den die p-polarisierte Strahlung des Projektors gerichtet ist. Der zweite Flächenbereich der elektrisch leitfähigen Beschichtung ist außerhalb der des HUD-Bereichs der Verbundscheibe angeordnet. Bevorzugt umgibt der zweite Flächenbereich den ersten Flächenbereich, wobei der erste Flächenbereich und der zweite Flächenbereich in Summe den von der elektrisch leitfähigen Beschichtung bedeckten Bereich der Verbundscheibe ergeben. Die elektrisch leifähige Beschichtung ist großflächig auf der Verbundscheibe angebracht, wobei bevorzugt zumindest der Durchsichtbereich der Verbundscheibe zu einem Großteil, bevorzugt zumindest 80%, besonders bevorzugt zumindest 90%, von der elektrisch leitfähigen Beschichtung bedeckt ist. Der Durchsichtbereich der Verbundscheibe ist dabei als der Bereich definiert, der im Einbauzustand der Verbundscheibe in der zu verglasenden Öffnung sichtbar ist und weder durch Befestigungselemente noch durch einen opaken Abdeckdruck verdeckt ist. Insbesondere ein umlaufender Randbereich der Verbundscheibe, der benachbart zur umlaufenden Kante der Verbundscheibe angeordnet ist, ist bevorzugt frei von elektrisch leitfähiger Beschichtung. Dadurch wird eine mögliche Korrosion der Beschichtung durch an der umlaufenden Kante eintretende Feuchtigkeit vermieden. Zudem ist ein beschichtungsfreier Randbereich vorteilhaft hinsichtlich einer verbesserten Transmission hochfrequenter elektromagnetischer Strahlung durch die Verbundscheibe. Ein beschichtungsfreier Randbereich kann beispielsweise durch Entfernen der elektrisch leitfähigen Beschichtung erzeugt werden. Optional können auch weitere entschichtete Bereiche vorgesehen werde, beispielsweise im Bereich eines Kamerafensters oder Sensorfensters. Die elektrisch leitfähige Beschichtung im zweiten Flächenbereich ist hinsichtlich ihrer geringen solaren Transmission und ihres ansprechenden optischen Erscheinungsbildes für die großflächige Aufbringung auf der Verbundscheibe optimiert, während die elektrisch leitfähige Beschichtung im ersten Flächenbereich hinsichtlich ihrer Reflektionseigenschaften für p-polarisiertes Licht gewählt ist, jedoch hinsichtlich ihrer solaren Transmission und ihres Erscheinungsbildes nur eingeschränkt für einen großflächigen Auftrag auf der Scheibe geeignet ist. Bevorzugt sind nimmt der erste Flächenbereich der elektrisch leitfähigen Beschichtung einen Flächenanteil von maximal 30%, besonders bevorzugt maximal 20%, insbesondere maximal 10% der Gesamtfläche der Verbundscheibe ein. Der erste und der zweite Flächenbereich können jeweils als durchgehende Flächen ausgestaltet sein, oder sich auch aus verschiedenen Teilflächen zusammensetzen. Insbesondere kann beispielsweise der erste Flächenbereich aus zwei oder mehr unabhängig voneinander angeordneten Bereichen bestehen, denen jeweils ein Projektor zugeordnet ist. Auf diese Weise können mehrere HUD-Bilder in Bereichen, die auf die Reflektion p-polarisierter Strahlung optimiert sind, auf der Scheibe erzeugt werden.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht. Die erste dielektrische Schicht oder Schichtenfolge kann auch als untere dielektrische Schicht oder Schichtenfolge bezeichnet werden und ist diejenige der dielektrischen Schichten, die sich dem Substrat am nächsten befindet. Die zweite dielektrische Schicht oder Schichtenfolge ist diejenige der dielektrischen Schichten, die als nächste darauffolgende dielektrische Schicht oberhalb der ersten dielektrischen Schicht auf dem Substrat angeordnet ist. Zwischen der ersten dielektrischen Schicht oder Schichtenfolge und der zweiten dielektrischen Schicht oder Schichtenfolge befindet sich die erste elektrisch leitfähige Schicht.

Ist eine Schicht auf Basis eines Materials ausgebildet, so besteht die Schicht mehrheitlich aus diesem Material, insbesondere im Wesentlichen aus diesem Material neben etwaigen Verunreinigungen oder Dotierungen.

In einer bevorzugten Ausführungsform besteht die elektrisch leitfähige Beschichtung innerhalb des gesamten ersten Flächenbereichs aus in dieser Reihenfolge einer ersten dielektrischen Schicht oder Schichtenfolge, einer elektrisch leitfähigen Schicht auf Basis von Silber und einer zweiten dielektrischen Schicht oder Schichtenfolge und ist geeignet, p-polarisierte Strahlung zu reflektieren. Somit liegt innerhalb des HUD-Bereichs der Verbundscheibe eine im wesentlichen gleichförmige Beschichtung vor, wobei innerhalb des HUD-Bereichs Teilbereiche mit unterschiedlichem Schichtaufbau vermieden werden. Dadurch ergeben sich Vorteile im Herstellungsverfahren, da eine gleichmäßige und gleichförmige Entschichtung des ersten Flächenbereichs wesentlich einfacher realisierbar ist als eine Strukturierung verschiedenartiger Teilbereiche. Darüber hinaus wird ein homogenes HUD-Abbild erzielt.

In einer anderen bevorzugten Ausführungsform weist die elektrisch leitfähige Beschichtung innerhalb des ersten Flächenbereichs ein regelmäßiges oder unregelmäßiges Raster von ersten Bereichen und zweiten Bereichen auf. Innerhalb der ersten Bereiche besteht die elektrisch leitfähige Beschichtung aus in dieser Reihenfolge einer ersten dielektrischen Schicht oder Schichtenfolge, einer elektrisch leitfähigen Schicht auf Basis von Silber und einer zweiten dielektrischen Schicht oder Schichtenfolge und ist geeignet p-polarisierte Strahlung zu reflektieren. In den zweiten Bereichen entspricht die elektrisch leitfähige Beschichtung dem Schichtstapel der elektrisch leitfähigen Beschichtung im zweiten Flächenbereich. Auf diese Weise bleiben auch innerhalb des ersten Flächenbereichs Bereiche erhalten, die in ihrem optischen Erscheinungsbild der Beschichtung des zweiten Flächenbereichs entsprechen. Somit ist der erste Flächenbereich optisch unauffällig integriert. Bevorzugt sind die ersten und zweiten Bereiche in Form eines regelmäßigen Rasters angeordnet. Die ersten Bereiche und die zweiten Bereiche können in ihrer Formgebung gleichförmig oder verschieden sein. Gleichförmige erste und zweite Bereiche sind beispielsweise als Schachbrettmuster oder Wabenmuster realisierbar. Bevorzugt werden die ersten Bereiche in Form von Aussparungen, innerhalb derer elektrisch leitfähigen Beschichtung realisiert, wobei sich der zweite Bereich als umliegend um die Aussparungen ergibt. Innerhalb der Aussparungen sind dergestalt Schichten der elektrisch leitfähigen Beschichtung entfernt, dass der verbleibende Schichtstapel innerhalb der ersten Bereiche aus einer ersten dielektrischen Schicht oder Schichtenfolge, einer elektrisch leitfähigen Schicht auf Basis von Silber und einer zweiten dielektrischen Schicht besteht. Die ersten Bereiche nehmen dabei beispielsweise die Gestalt eines Rasters an und sind von einem zusammenhängenden zweiten Bereich umgeben. Dieses Raster kann beispielsweise quadratisch oder hexagonal sein. Dabei wechseln sich erste Bereiche mit einer funktionalen Silberschicht mit zweiten Bereichen, in denen mindestens zwei funktionale Silberschichten vorliegen, ab. Die Gesamtreflektivität für p-polarisierte Strahlung innerhalb des ersten Flächenbereichs ist in dieser rasterförmigen Ausgestaltung leicht verschlechtert, im Vergleich zu einem innerhalb des ersten Flächenbereichs vollflächig vorliegenden Schichtsystem mit nur einer funktionalen Silberschicht. Die ersten und/oder zweiten Bereiche weisen bevorzugt eine Kantenlänge von 50 µm bis 500 µm auf, wobei die Kantenlänge als maximale Ausdehnung des Bereichs entlang einer Richtung bestimmt wird. Es hat sich herausgestellt, dass ein guter Kompromiss zwischen optischem Erscheinungsbild und Reflektivität erreicht wird, sofern die Größe der ersten und/oder zweiten Bereiche mit einer Kantenlänge von 50 µm bis 150 µm, beispielsweise 100 µm, ausgestaltet wird.

In einer besonders bevorzugten Ausgestaltung der Erfindung werden die beiden soeben beschriebenen Ausführungsformen dergestalt kombiniert, dass lediglich entlang der umlaufenden Kante des ersten Flächenbereichs, an der erster Flächenbereich und zweiter Flächenbereich aneinandergrenzen, ein regelmäßiges Raster von ersten und zweiten Bereichen vorliegt. In der Flächenmitte des ersten Flächenbereichs, also außerhalb des der umlaufenden Kante benachbarten Randbereichs, befindet sich ein durchgehender Bereich mit nur einer funktionalen Silberschicht. Somit besteht in der Flächenmitte des ersten Flächenbereichs, in dem ein Großteil des HUD-Bildes sichtbar ist, die gewünscht hohe Reflektivität für p-polarisierte Strahlung. Im Randbereich des ersten Flächenbereichs wird hingegen der Übergang zwischen der Beschichtung im ersten Flächenbereich und im zweiten Flächenbereich kaschiert und die Verbundscheibe somit optisch gefälliger.

Die elektrisch leitfähige Beschichtung weist vorteilhafterweise zumindest im ersten Flächenbereich mindestens einen Teilbereich auf, in dem die erste dielektrische Schicht oder Schichtenfolge einen Brechungsindex von mindestens 1,9 aufweist und/oder die zweite dielektrische Schicht oder Schichtenfolge einen Brechungsindex von mindestens 1,9 aufweist. Bevorzugt weisen im gesamten ersten Flächenbereich die erste dielektrische Schicht oder Schichtenfolge und die zweite dielektrische Schicht oder Schichtenfolge einen Brechungsindex von jeweils mindestens 1,9 auf. Besonders bevorzugt weisen auch im zweiten Flächenbereich die erste dielektrische Schicht oder Schichtenfolge, die zweite dielektrische Schicht oder Schichtenfolge, die dritte dielektrische Schicht oder Schichtenfolge sowie optionale weitere dielektrische Schichten oder Schichtenfolgen einen Brechungsindex von jeweils mindestens 1,9 auf. Eine Ausgestaltung der Erfindung unter Verwendung niedrigbrechender Schichten wäre prinzipiell möglich, allerdings kommen als niedrigbrechende Schichten mit einem Brechungsindex von kleiner als 1,9 insbesondere Siliziumoxid-Schichten in Frage. Siliziumoxid-Schichten weisen jedoch geringe Abscheidungsraten bei der magnetfeldunterstützten Kathodenabscheidung auf. Unter Verwendung höherbrechender Schichten mit einem Brechungsindex von mindestens 1,9 lässt sich die erfindungsgemäße Reflexionsbeschichtung jedoch schnell und kostengünstig herstellen.

Brechungsindizes sind im Rahmen der vorliegenden Erfindung grundsätzlich bezogen auf eine Wellenlänge von 550 nm angegeben. Die optische Dicke ist das Produkt aus der geometrischen Dicke und dem Brechungsindex (bei 550 nm). Die optische Dicke einer Schichtenfolge berechnet sich als Summe der optischen Dicken der Einzelschichten. Der Brechungsindex kann beispielsweise mittels Ellipsometrie bestimmt werden. Ellipsometer sind kommerziell erhältlich, beispielsweise von der Firma Sentech.

Bevorzugt beträgt das Verhältnis der optischen Dicke der zweiten dielektrischen Schicht oder Schichtenfolge zur optischen Dicke der ersten dielektrischen Schicht oder Schichtenfolge mindestens 1,7. Es hat sich überraschend gezeigt, dass diese Asymmetrie der optischen Dicken zu einem deutlich glatteren Reflexionsspektrum gegenüber p-polarisierter Strahlung führt, so dass über den gesamten relevanten Spektralbereich (400 nm bis 680 nm) ein relativ konstanter Reflexionsgrad vorliegt. Dadurch wird eine farbneutrale Darstellung der HUD-Projektion gewährleistet und ein farbneutraler Gesamteindruck der Scheibe wird erzielt.

Das bevorzugte Verhältnis der optischen Dicken berechnet sich als Quotient aus der optischen Dicke der zweiten dielektrischen Schicht oder Schichtenfolge (Divident) geteilt durch die optische Dicke der ersten dielektrischen Schicht oder Schichtenfolge (Divisor).

In einer bevorzugten Ausgestaltung beträgt das Verhältnis der optischen Dicke der zweiten dielektrischen Schicht oder Schichtenfolge zur optischen Dicke der ersten dielektrischen Schicht oder Schichtenfolge mindestens 1,8, besonders bevorzugt mindestens 1,9. Damit werden besonders gute Ergebnisse erzielt.

Die elektrisch leitfähige Beschichtung ist bevorzugt auf einer der thermoplastischen Zwischenschicht zugewandten Oberflächen der beiden Scheiben, also der innenraumseitigen Oberfläche der Außenscheibe oder der außenseitigen Oberfläche der Innenscheibe, aufgebracht. Alternativ kann die elektrisch leitfähige Beschichtung auch innerhalb der thermoplastischen Zwischenschicht angeordnet sein, beispielsweise aufgebracht auf einer Trägerfolie, die zwischen zwei thermoplastischen Verbundfolien angeordnet ist. Die elektrisch leitfähige Beschichtung ist transparent, was im Sinne der Erfindung bedeutet, dass sie eine mittlere Transmission im sichtbaren Spektralbereich von mindestens 70 %, bevorzugt mindestens 80 % aufweist und dadurch die Durchsicht durch die Scheibe nicht wesentlich einschränkt. In einer Ausgestaltung der Erfindung sind mindestens 80% der Scheibenoberfläche mit der elektrisch leitfähigen Beschichtung versehen. Insbesondere ist die elektrisch leitfähige Beschichtung vollflächig auf die Scheibenoberfläche aufgebracht mit Ausnahme eines umlaufenden Randbereichs und optional lokaler Bereich, die als Kommunikations-, Sensor- oder Kamerafenster die Transmission von elektromagnetischer Strahlung durch die Windschutzscheibe gewährleisten sollen und daher nicht mit der elektrisch leitfähigen Beschichtung versehen sind. Der umlaufende unbeschichtete Randbereich weist beispielsweise eine Breite von bis zu 20 cm auf. Er verhindert den direkten Kontakt der elektrisch leitfähigen Beschichtung zur umgebenden Atmosphäre, so dass die Beschichtung im Innern der Windschutzscheibe vor Korrosion und Beschädigung geschützt ist.

Die erfindungsgemäße elektrisch leitfähige Beschichtung weist aufgrund der elektrisch leitfähigen Silberschicht IR-reflektierende Eigenschaften auf, so dass sie als Sonnenschutzbeschichtung fungiert, welche die Aufheizung des Fahrzeuginnenraums durch Reflexion der Wärmestrahlung verringert. Die elektrisch leitfähige Beschichtung kann auch als Heizbeschichtung verwendet werden, wenn sie elektrisch kontaktiert wird, so dass ein Strom durch sie fließt, welcher die Beschichtung erwärmt.

Die mit der elektrisch leitfähigen Beschichtung versehene Verbundscheibe weist im ersten Flächenbereich bevorzugt im Spektralbereich von 400 nm bis 680 nm einen gemittelten Reflexionsgrad gegenüber p-polarisierter Strahlung von mindestens 10% auf, besonders bevorzugt von mindestens 15% Damit wird ein hinreichend intensitätsstarkes Projektionsbild erzeugt. Hierbei wird der Reflexionsgrad gemessen mit einem Einfallswinkel von 65° zur innenraumseitigen Flächennormalen, was etwa der Bestrahlung durch übliche Projektoren entspricht. Der Spektralbereich von 400 nm bis 680 nm wurde zur Charakterisierung der Reflexionseigenschaften herabgezogen, weil der optische Eindruck eines Betrachters in erster Linie durch diesen Spektralbereich geprägt wird. Außerdem deckt er die für die HUD-Darstellung relevanten Wellenlängen ab (RGB: 473 nm, 550 nm, 630 nm). Der hohe Reflexionsgrad bei einem vergleichsweise einfachen Schichtaufbau ist ein großer Vorteil der vorliegenden Erfindung. Besonders gute Ergebnisse werden erzielt, wenn die Reflexionsgrad im gesamten Spektralbereich von 400 nm bis 680 nm mindestens 15 %, bevorzugt mindestens 20 % beträgt, so dass der Reflexionsgrad im angegeben Spektralbereich an keiner Stelle unter den angegebenen Werten liegt.

Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum. Die Ausführungen zum Reflexionsgrad gegenüber p-polarisierter Strahlung beziehen sich im Rahmen der vorliegenden Erfindung auf den Reflexionsgrad gemessen mit einem Einfallswinkel von 65° zur innenraumseitigen Flächennormalen. Die Angaben zum Reflexionsgrad beziehungsweise zum Reflexionsspektrum beziehen sich auf eine Reflexionsmessung mit einer Lichtquelle, die im betrachteten Spektralbereich gleichmäßig abstrahlt mit einer normierten Strahlungsintensität von 100%.

Um eine möglichst farbneutrale Darstellung des Projektorbildes zu erreichen, sollte das Reflexionsspektrum möglichst glatt sein und keine ausgeprägten lokalen Minima und Maxima ausweisen. Im Spektralbereich von 400 nm bis 680 nm sollte die Differenz zwischen dem maximal auftretenden Reflexionsgrad und dem Mittelwert des Reflexionsgrades sowie die Differenz zwischen dem minimal auftretenden Reflexionsgrad und dem Mittelwert des Reflexionsgrades in einer bevorzugten Ausgestaltung höchstens 3 % betragen, besonders bevorzugt höchstens 2 %. Auch hier ist wieder der Reflexionsgrad gegenüber p-polarisierter Strahlung gemessen mit einem Einfallswinkel von 65° zur innenraumseitigen Flächennormalen heranzuziehen. Die abgegebene Differenz ist als absolute Abweichung des Reflexionsgrades (angegeben in %) zu verstehen, nicht als prozentuale Abweichung relativ zum Mittelwert. Die gewünschte Glätte des Reflexionsspektrums im ersten Flächenbereich kann mit der erfindungsgemäßen elektrisch leitfähigen Beschichtung aufgrund ihrer genau einen elektrisch leitfähigen Schicht im ersten Flächenbereich problemlos erreicht werden.

Als Maß für die Glätte des Reflexionsspektrums kann alternativ die Standardabweichung im Spektralbereich von 400 nm bis 680 nm herangezogen werden. Sie beträgt bevorzugt kleiner 1%, besonders bevorzugt kleiner 0,9 %, ganz besonders bevorzugt kleiner 0,8 %.

Die oben genannten gewünschten Reflexionscharakteristika werden insbesondere durch die Wahl der Materialien und Dicken der Einzelschichten sowie den Aufbau der dielektrischen Schichtenfolgen erreicht. Die elektrisch leitfähige Beschichtung kann so geeignet eingestellt werden.

Die elektrisch leitfähige Beschichtung ist ein Dünnschichtstapel, also eine Schichtenfolge dünner Einzelschichten. Dieser Dünnschichtstapel enthält in mindestens einem Teilbereich des ersten Flächenbereichs, bevorzugt im gesamten ersten Flächenbereich, genau eine elektrisch leitfähige Schicht auf Basis von Silber. Die elektrisch leitfähige Schicht auf Basis von Silber verleiht der Beschichtung die grundlegenden reflektierenden Eigenschaften und außerdem eine IR-reflektierende Wirkung und eine elektrische Leitfähigkeit. Die elektrisch leitfähige Schicht auf Basis von Silber kann auch vereinfacht als Silberschicht bezeichnet werden. Die elektrisch leitfähige Beschichtung enthält in diesem Teilbereich des ersten Flächenbereichs genau eine Silberschicht, also nicht mehr als eine Silberschicht, und auch oberhalb oder unterhalb der elektrisch leitfähigen Beschichtung sind keine weiteren Silberschichten angeordnet. Es ist ein besonderer Vorteil der vorliegenden Erfindung, dass mit einer Silberschicht die gewünschten Reflexionseigenschaften erreicht werden können, ohne dass die Transmission zu stark herabgesetzt würde, wie es bei der Verwendung mehrerer leitfähiger Schichten der Fall wäre. Es können aber weitere elektrisch leitfähige Schichten vorliegen, die nicht wesentlich zur elektrischen Leitfähigkeit der elektrisch leitfähigen Beschichtung beitragen, sondern einen anderen Zweck erfüllen. Dies gilt insbesondere für metallische Blockerschichten mit geometrischen Dicken von weniger als 1 nm, die bevorzugt zwischen der Silberschicht und den dielektrischen Schichtenfolgen angeordnet sind.

Die erste elektrisch leitfähige Schicht und die zweite elektrisch leitfähige Schicht sind auf Basis von Silber ausgebildet. Die leitfähigen Schichten enthalten bevorzugt mindestens 90 Gew. % Silber, besonders bevorzugt mindestens 99 Gew. % Silber, ganz besonders bevorzugt mindestens 99,9 Gew. % Silber. Die Silberschichten können Dotierungen aufweisen, beispielsweise Paladium, Gold, Kupfer oder Aluminium. Die geometrische Schichtdicke der Silberschichten beträgt bevorzugt höchstens 15 nm, besonders bevorzugt höchstens 14 nm, ganz besonders bevorzugt höchstens 13 nm. Dadurch kann eine vorteilhafte Reflektivität im IR-Bereich, ohne die Transmission zu stark herabzusetzen. Die geometrische Schichtdicke der Silberschicht beträgt bevorzugt mindestens 5 nm, besonders bevorzugt mindestens 8 nm. Dünnere Silberschichten können zu einer Entnetzung des Schichtaufbaus führen. Besonders bevorzugt beträgt die geometrische Schichtdicke der Silberschichten von 10 nm bis 14 nm oder von 11 nm bis 13 nm.

Die elektrisch leitfähige Beschichtung enthält bevorzugt alternierend mit den Silberschichten unabhängig voneinander jeweils eine dielektrische Schicht oder eine dielektrische Schichtenfolge mit einem Brechungsindex von mindestens 1,9. Die dielektrischen Schichten können beispielsweise auf Basis von Siliziumnitrid, Zinkoxid, Zinn-Zink-Oxid, Silizium-Metall-Mischnitriden wie Silizium-Zirkonium-Nitrid, Zirkoniumoxid, Nioboxid, Hafniumoxid, Tantaloxid, Wolframoxid oder Siliziumkarbid ausgebildet sein. Die genannten Oxide und Nitride können stöchiometrisch, unterstöchiometrisch oder überstöchiometrisch abgeschieden sein. Sie können Dotierungen aufweisen, beispielsweise Aluminium, Zirkonium, Titan oder Bor.

Die optische Dicke der zweiten dielektrischen Schicht oder Schichtenfolge beträgt bevorzugt von 100 nm bis 200 nm, besonders bevorzugt von 130 nm bis 170 nm. Die optische Dicke der ersten dielektrischen Schicht oder Schichtenfolge beträgt bevorzugt von 50 nm bis 100 nm, besonders bevorzugt von 60 nm bis 90 nm. Damit werden gute Ergebnisse hinsichtlich eines deutlich glatteren Reflexionsspektrum gegenüber p-polarisierter Strahlung erreicht. Die erste dielektrische Schicht und die zweite dielektrische Schicht liegen im ersten Flächenbereich vor, wodurch diese eine besondere Relevanz für die Reflektivität im HUD-Bereich aufweisen. Die dritte dielektrische Schicht und gegebenenfalls weitere dielektrische Schichten sind im zweiten Flächenbereich außerhalb des HUD-bereichs angeordnet. Demnach sind diese nicht relevant für die Eigenschaften des HUD-Bereichs. Aus diesem Grund sind die optischen Dicken der dritten dielektrischen Schicht oder Schichtenfolge sowie eventuell vorhandener weiterer dielektrischer Schichten oder Schichtfolgen in größeren Bereichen wählbar. Bevorzugt beträgt die optische Dicke der dritten dielektrischen Schicht oder Schichtfolge 50 nm bis 200 nm, besonders bevorzugt 60 nm bis 150 nm. Die optischen Dicken weiterer dielektrischer Schichten oder Schichtfolgen sind im gleichen Bereich frei wählbar.

In einer vorteilhaften Ausgestaltung ist oberhalb und unterhalb der Silberschicht jeweils eine dielektrische Schicht angeordnet, die als Entspiegelungsschicht bezeichnet werden kann. Eine solche Entspiegelungsschicht ist bevorzugt jeweils Bestandteil der ersten dielektrischen Schicht oder Schichtenfolge, der zweiten dielektrischen Schicht oder Schichtenfolge und der dritten dielektrischen Schicht oder Schichtenfolge. Die Entspiegelungsschichten sind bevorzugt auf Basis eines Oxids, beispielsweise Zinnoxid, und/oder eines Nitrids, beispielsweise Siliziumnitrid, besonders bevorzugt auf Basis von Siliziumnitrid aufgebaut. Siliziumnitrid hat sich aufgrund seiner optischen Eigenschaften, seiner einfachen Verfügbarkeit sowie seiner hohen mechanischen und chemischen Stabilität bewährt. Das Silizium ist bevorzugt dotiert, beispielsweise mit Aluminium oder Bor. Im Falle von dielektrischen Schichtenfolgen ist die Schicht auf Basis von Siliziumnitrid bevorzugt die oberste Schicht der oberen, also der zweiten oder dritten, Schichtenfolge beziehungsweise die unterste Schicht der unteren, also der ersten Schichtenfolge. Die geometrische Dicke der oberen Entspiegelungsschicht, die in der zweiten und/oder dritten dielektrischen Schicht oder Schichtenfolge vorliegt, beträgt bevorzugt von 25 nm bis 100 nm, besonders bevorzugt von 30 nm bis 80 nm, insbesondere von 60 nm bis 70 nm. Die geometrische Dicke der unteren Entspiegelungsschicht, die in der ersten dielektrischen Schicht oder Schichtenfolge liegt, beträgt bevorzugt von 10 nm bis 50 nm, besonders bevorzugt von 15 nm bis 40 nm, insbesondere von 20 nm bis 35 nm.

Bevorzugt schließt der Schichtstapel der dritten dielektrischen Schicht mit einer Entspiegelungsschicht ab. Bevorzugt ist innerhalb des ersten Flächenbereichs die zweite Entspiegelungsschicht als abschließende Schicht vorgesehen. Die zweite Entspiegelungsschicht bildet demnach die vom Substrat abgewandte Schicht, die am weitesten vom Substrat entfernt ist.

Neben der Entspiegelungsschicht können optional weitere dielektrische Schichten mit Brechungsindex von mindestens 1,9 vorhanden sein. So können die Schichtenfolgen der dielektrischen Schichten unabhängig voneinander Anpassungsschichten enthalten, welche die Reflektivität der Silberschichten verbessern. Die Anpassungsschichten sind bevorzugt auf Basis von Zinkoxid ausgebildet, besonders bevorzugt Zinkoxid ZnO_{1-δ} mit 0 ≤ δ ≤ 0,01. Die Anpassungsschichten enthalten weiter bevorzugt Dotierungen. Die Anpassungsschichten können beispielsweise Aluminium-dotiertes Zinkoxid (ZnO:AI) enthalten. Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden. Die Anpassungsschichten sind bevorzugt angeordnet zwischen der Silberschicht und der Entspiegelungsschicht. Die geometrische Dicke der Anpassungsschicht beträgt bevorzugt von 5 nm bis 30 nm, besonders bevorzugt von 8 nm bis 12 nm.

Es können auch brechungsindexsteigernde Schichten vorhanden sein, die einen höheren Brechungsindex aufweisen als die Entspiegelungsschicht, ebenfalls unabhängig voneinander in den dielektrischen Schichtenfolgen. Dadurch können die optischen Eigenschaften weiter verbessert und feineingestellt werden, insbesondere die Reflexionseigenschaften. Die brechungsindexsteigernden Schichten enthalten bevorzugt ein Silizium-Metall-Mischnitrid wie Silizium-Zirkonium-Mischnitrid, Silizium-Aluminium-Mischnitrid, Silizium-Titan-Mischnitrid oder Silizium-Hafnium-Mischnitrid, besonders bevorzugt Silizium-Zirkonium-Mischnitrid. Der Anteil an Zirkonium beträgt dabei bevorzugt zwischen 15 und 45 Gew.-%, besonders bevorzugt zwischen 15 und 30 Gew.-%. Als alternative Materialien kommen beispielsweise WO₃, Nb₂O₅, Bi₂O₃, TiO₂, Zr₃N₄ und/oder AIN in Betracht. Die brechungsindexsteigernden Schichten sind bevorzugt zwischen der Entspiegelungsschicht und der Silberschichtung angeordnet beziehungsweise zwischen der Anpassungsschicht (soweit vorhanden) und der Entspiegelungsschicht. Die geometrische Dicke der brechungsindexsteigernden Schicht beträgt bevorzugt von 5 nm bis 30 nm, besonders bevorzugt von 5 nm bis 15 nm.

Die dielektrischen Schichtfolgen können des Weiteren Glättungsschichten umfassen. Diese sind bevorzugt jeweils unter- oder oberhalb der einer Silberschicht benachbarten Anpassungsschicht angeordnet. Die Glättungsschichten stehen bevorzugt in direktem Kontakt zur einer Anpassungsschicht. Die Glättungsschicht bewirken eine Optimierung, insbesondere Glättung der Oberfläche für eine anschließend oberhalb aufgebrachte elektrisch leitfähige Schicht. Eine auf eine glattere Oberfläche abgeschiedene elektrisch leitfähige Schicht weist einen höheren Transmissionsgrad bei einem gleichzeitig niedrigeren Flächenwiderstand auf. Die Glättungsschichten enthalten zumindest ein nichtkristallines Oxid. Das Oxid kann amorph oder teilamorph (und damit teilkristallin) sein, ist aber nicht vollständig kristallin. Die nichtkristallinen Glättungsschichten weisen eine geringe Rauheit auf und bilden somit eine vorteilhaft glatte Oberfläche für die oberhalb der Glättungsschicht aufzubringenden Schichten. Eine nichtkristalline erste Glättungsschicht bewirkt weiter eine verbesserte Oberflächenstruktur der direkt oberhalb der Glättungsschicht abgeschiedenen Schicht, welche bevorzugt die erste Anpassungsschicht ist. Die Glättungsschichten können beispielsweise zumindest ein Oxid eines oder mehrerer der Elemente Zinn, Silizium, Titan, Zirkonium, Hafnium, Zink, Gallium und Indium enthalten. Die Glättungsschichten enthalten bevorzugt ein nichtkristallines Mischoxid. Die Glättungsschichten enthalten ganz besonders bevorzugt ein Zinn-Zink-Mischoxid. Das Mischoxid kann optional auch Dotierungen aufweisen. Die Glättungsschichten können beispielsweise ein Antimon-dotiertes Zinn-Zink-Mischoxid (SnZnOx:Sb) enthalten. Das Mischoxid weist bevorzugt einen unterstöchiometrischen Sauerstoffgehalt auf. Ein Verfahren zur Herstellung von Zinn-Zink-Mischoxid-Schichten durch reaktive Kathodenzerstäubung ist beispielsweise aus DE 198 48 751 C1 bekannt. Die Abscheidung des Zinn-Zink-Mischoxids erfolgt unter Zugabe von Sauerstoff als Reaktionsgas während der Kathodenzerstäubung. Die Schichtdicke der Glättungsschichten beträgt bevorzugt von 3 nm bis 20 nm besonders bevorzugt von 4 nm bis 12 nm. Die Glättungsschichten weisen bevorzugt einen Brechungsindex von mindestens 1,9 und von kleiner als 2,2 auf.

In einer weiteren Ausgestaltung der Erfindung umfasst die erste dielektrische Schicht eine erste Entspiegelungsschicht und eine erste Anpassungsschicht. Ebenso umfasst die zweite dielektrische Schicht eine zweite Entspiegelungsschicht und eine zweite Anpassungsschicht, sowie die dritte dielektrische Schicht eine dritte Entspiegelungsschicht und eine dritte Anpassungsschicht. Im zweiten Flächenbereich, in dem auf die zweite dielektrische Schicht eine zweite Silberschicht folgt, umfasst die zweite dielektrische Schicht bevorzugt zwei Anpassungsschichten, so dass sowohl der ersten Silberschicht als auch der zweiten Silberschicht eine Anpassungsschicht benachbart ist. Die Entspiegelungs- und Anpassungsschichten weisen einen Brechungsindex von mindestens 1,9 auf. Die Entspiegelungsschichten sind bevorzugt auf Basis von Siliziumnitrid ausgebildet, die Anpassungsschichten auf Basis von Zinkoxid. Die Anpassungsschichten sind bevorzugt zwischen der jeweiligen Entspiegelungsschicht und der Silberschicht angeordnet: Es ergibt sich die Schichtenfolge ausgehend vom Substrat: erste Entspiegelungsschicht - erste Anpassungsschicht - erste Silberschicht - zweite Anpassungsschicht - zweite Entspiegelungsschicht, im zweiten Flächenbereich gefolgt von einer weiteren zweiten Anpassungsschicht - zweite Silberschicht - dritte Anpassungsschicht - dritte Entspiegelungsschicht. Die elektrisch leitfähige Beschichtung enthält innerhalb des ersten Flächenbereichs bevorzugt keine weiteren dielektrischen Schichten. Im zweiten Flächenbereich können insbesondere dann weitere dielektrische Schichten vorgesehen sein, wenn mehr als zwei Silberschichten vorhanden sind. Die geometrische Dicke der zweiten Entspiegelungsschicht beträgt bevorzugt von 50 nm bis 100 nm, besonders bevorzugt von 55 nm bis 80 nm, insbesondere von 60 nm bis 70 nm. Die geometrische Dicke der ersten Entspiegelungsschicht beträgt bevorzugt von 10 nm bis 50 nm, besonders bevorzugt von 15 nm bis 40 nm, insbesondere von 20 nm bis 35 nm. Die geometrische Dicke der Anpassungsschichten beträgt bevorzugt von 5 nm bis 30 nm, besonders bevorzugt von 8 nm bis 12 nm.

In einer weiteren Ausgestaltung der Erfindung umfasst die erste dielektrische Schicht eine erste Entspiegelungsschicht, eine erste Anpassungsschicht und eine erste brechungsindexsteigernde Schicht. Ebenso umfasst die zweite dielektrische Schicht eine zweite Entspiegelungsschicht, eine zweite Anpassungsschicht und eine zweite brechungsindexsteigernde Schicht, sowie die dritte dielektrische Schicht eine dritte Entspiegelungsschicht, eine dritte Anpassungsschicht und eine dritte brechungsindexsteigernde Schicht. Im zweiten Flächenbereich, in dem auf die zweite dielektrische Schicht eine zweite Silberschicht folgt, umfasst die zweite dielektrische Schicht bevorzugt zwei Anpassungsschichten, so dass sowohl der ersten Silberschicht als auch der zweiten Silberschicht eine Anpassungsschicht benachbart ist. Die Entspiegelungs- und Anpassungsschichten sowie die brechungsindexsteigernden Schichten weisen einen Brechungsindex von mindestens 1,9 auf. Die brechungsindexsteigernden Schichten weisen einen höheren Brechungsindex auf als die Entspiegelungsschichten, bevorzugt mindestens 2,1. Die Entspiegelungsschichten sind bevorzugt auf Basis von Siliziumnitrid ausgebildet, die Anpassungsschichten auf Basis von Zinkoxid, die brechungsindexsteigernden Schichten auf Basis eines Silizium-Metall-Mischnitrids, wie Silizium-Zirkonium-Mischnitrid oder Silizium-Hafnium-Mischnitrid. Die Anpassungsschichten weisen bevorzugt den geringsten Abstand zur Silberschicht auf, während die brechungsindexsteigernden Schichten zwischen den Anpassungsschichten und den Entspiegelungsschichten angeordnet sind. Es ergibt sich die Schichtenfolge ausgehend vom Substrat: erste Entspiegelungsschicht - erste brechungsindexsteigernde Schicht - erste Anpassungsschicht - erste Silberschicht - zweite Anpassungsschicht - zweite brechungsindexsteigernde Schicht - zweite Entspiegelungsschicht, im zweiten Flächenbereich gefolgt von einer weiteren zweiten Anpassungsschicht - zweite Silberschicht - dritte Anpassungsschicht - dritte brechungsindexsteigernde Schicht - dritte Entspiegelungsschicht. Die elektrisch leitfähige Beschichtung enthält innerhalb des ersten Flächenbereichs bevorzugt keine weiteren dielektrischen Schichten. Im zweiten Flächenbereich können insbesondere dann weitere dielektrische Schichten vorgesehen sein, wenn mehr als zwei Silberschichten vorhanden sind. Die geometrische Dicke der oberen Entspiegelungsschicht beträgt bevorzugt von 25 nm bis 100 nm, besonders bevorzugt von 30 nm bis 80 nm, Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm. Die geometrische Dicke der Anpassungsschichten beträgt bevorzugt von 5 nm bis 30 nm, besonders bevorzugt von 8 nm bis 12 nm. Die geometrische Dicke der brechungsindexsteigernden Schichten beträgt bevorzugt von 5 nm bis 30 nm, besonders bevorzugt von 5 nm bis 15 nm.

In einer weiteren vorteilhaften Ausgestaltung der Erfindung umfasst die erste dielektrische Schicht eine erste Entspiegelungsschicht, eine erste Anpassungsschicht, eine erste brechungsindexsteigernde Schicht und eine erste Glättungsschicht. Ebenso umfasst die zweite dielektrische Schicht eine zweite Entspiegelungsschicht, eine zweite Anpassungsschicht, eine zweite brechungsindexsteigernde Schicht und eine zweite Glättungsschicht, sowie die dritte dielektrische Schicht eine dritte Entspiegelungsschicht, eine dritte Anpassungsschicht, eine dritte brechungsindexsteigernde Schicht und optional eine dritte Glättungsschicht. Eine dritte Glättungsschicht wird insbesondere dann vorgesehen, wenn die elektrisch leitfähige Beschichtung mehr als zwei Silberschichten umfasst. Im zweiten Flächenbereich, in dem auf die zweite dielektrische Schicht eine zweite Silberschicht folgt, umfasst die zweite dielektrische Schicht bevorzugt zwei Anpassungsschichten, so dass sowohl der ersten Silberschicht als auch der zweiten Silberschicht eine Anpassungsschicht benachbart ist. Die Entspiegelungs-, Anpassungs- und Glättungsschichten sowie die brechungsindexsteigernden Schichten weisen einen Brechungsindex von mindestens 1,9 auf. Die brechungsindexsteigernden Schichten weisen einen höheren Brechungsindex auf als die Entspiegelungsschichten, bevorzugt mindestens 2,1. Die Entspiegelungsschichten sind bevorzugt auf Basis von Siliziumnitrid ausgebildet, die Anpassungsschichten auf Basis von Zinkoxid, die brechungsindexsteigernden Schichten auf Basis eines Silizium-Metall-Mischnitrids, wie Silizium-Zirkonium-Mischnitrid oder Silizium-Hafnium-Mischnitrid. Die Anpassungsschichten weisen bevorzugt den geringsten Abstand zur Silberschicht auf, während die brechungsindexsteigernden Schichten zwischen den Anpassungsschichten und den Entspiegelungsschichten angeordnet sind. Die Glättungsschichten sind bevorzugt jeweils unter- oder oberhalb der einer Silberschicht benachbarten Anpassungsschicht angeordnet. Die Glättungsschichten stehen bevorzugt in direktem Kontakt zur einer Anpassungsschicht. Die Glättungsschichten enthalten ganz besonders bevorzugt ein Zinn-Zink-Mischoxid. Es ergibt sich die Schichtenfolge ausgehend vom Substrat: erste Entspiegelungsschicht - erste brechungsindexsteigernde Schicht - erste Glättungsschicht - erste Anpassungsschicht - erste Silberschicht - zweite Anpassungsschicht - zweite Glättungsschicht - zweite brechungsindexsteigernde Schicht - zweite Entspiegelungsschicht, im zweiten Flächenbereich gefolgt von einer weiteren zweiten Anpassungsschicht - zweite Silberschicht - dritte Anpassungsschicht - dritte brechungsindexsteigernde Schicht - dritte Entspiegelungsschicht. Die elektrisch leitfähige Beschichtung enthält innerhalb des ersten Flächenbereichs bevorzugt keine weiteren dielektrischen Schichten. Im zweiten Flächenbereich können insbesondere dann weitere dielektrische Schichten vorgesehen sein, wenn mehr als zwei Silberschichten vorhanden sind. Bei mehr als zwei Silberschichten wird bevorzugt auch eine dritte Glättungsschicht innerhalb der dritten dielektrischen Schichtfolge verwendet. Die geometrische Dicke der oberen Entspiegelungsschicht beträgt bevorzugt von 25 nm bis 100 nm, besonders bevorzugt von 30 nm bis 80 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm. Die geometrische Dicke der Anpassungsschichten beträgt bevorzugt von 5 nm bis 30 nm, besonders bevorzugt von 8 nm bis 12 nm. Die geometrische Dicke der brechungsindexsteigernden Schichten beträgt bevorzugt von 5 nm bis 30 nm, besonders bevorzugt von 5 nm bis 15 nm. Die Schichtdicke der Glättungsschichten beträgt bevorzugt von 3 nm bis 20 nm besonders bevorzugt von 4 nm bis 12 nm.

Da sämtliche dielektrischen Schichtenfolge unabhängig voneinander ausgebildet werden können, sind auch Kombinationen der vorstehend beschriebenen Ausgestaltungen möglich, wobei die erste, zweite und/oder dritte dielektrische Schicht/Schichtenfolge gemäß einer Ausgestaltung ausgebildet sind und die verbleibenden dielektrischen Schichten/Schichtenfolgen gemäß einer oder mehrerer anderen. Es ergeben sich die folgenden bevorzugten Schichtenfolgen im ersten Flächenbereich der elektrisch leitfähigen Beschichtung (jeweils ausgehend vom Substrat, also derjenigen Oberfläche, auf die die elektrisch leitfähige Beschichtung abgeschieden ist):
- erste Entspiegelungsschicht - erste Silberschicht - obere Entspiegelungsschicht
- erste Entspiegelungsschicht - erste Silberschicht - zweite Anpassungsschicht - zweite Entspiegelungsschicht
- erste Entspiegelungsschicht - erste Silberschicht - zweite Anpassungsschicht - zweite brechungsindexsteigernde Schicht - zweite Entspiegelungsschicht
- erste Entspiegelungsschicht - erste Anpassungsschicht - erste Silberschicht - zweite Entspiegelungsschicht
- erste Entspiegelungsschicht - erste Anpassungsschicht - erste Silberschicht - zweite Anpassungsschicht - zweite Entspiegelungsschicht
- erste Entspiegelungsschicht - erste Anpassungsschicht - erste Silberschicht - zweite Anpassungsschicht - zweite brechungsindexsteigernde Schicht - zweite Entspiegelungsschicht
- erste Entspiegelungsschicht - erste brechungsindexsteigernde Schicht - erste Anpassungsschicht - erste Silberschicht - zweite Entspiegelungsschicht
- erste Entspiegelungsschicht - erste brechungsindexsteigernde Schicht - erste Anpassungsschicht - erste Silberschicht - zweite Anpassungsschicht - zweite Entspiegelungsschicht
- erste Entspiegelungsschicht - erste brechungsindexsteigernde Schicht - erste Anpassungsschicht - erste Silberschicht - zweite Anpassungsschicht - zweite brechungsindexsteigernde Schicht - zweite Entspiegelungsschicht

Im zweiten Flächenbereich sind weitere Schichten, zumindest eine zweite Silberschicht und eine dritte dielektrische Schicht vorhanden. Die dritte dielektrische Schicht kann ihrerseits ebenfalls die genannten Schichtfolgen dielektrischer Schichten umfassen. Im zweiten Flächenbereich der elektrisch leitfähigen Beschichtung können auch eine dritte oder weitere Silberschichten sowie eine vierte und weitere dielektrische Schichtenfolgen vorhanden sein.

In einer vorteilhaften Ausgestaltung umfasst die elektrisch leitfähige Beschichtung mindestens eine metallische Blockerschicht. Die Blockerschicht kann unterhalb und/oder oberhalb der Silberschicht angeordnet sein und steht bevorzugt mit der Silberschicht in direktem Kontakt. Die Blockerschicht liegt dann zwischen Silberschicht und dielektrischer Schicht/Schichtenfolge. Die Blockerschicht dient dem Oxidationsschutz der Silberschicht insbesondere bei Temperaturbehandlungen der beschichteten Scheibe, wie sie typischerweise im Rahmen von Biegeprozessen vorkommen. Die Blockerschicht weist bevorzugt eine geometrische Dicke von weniger als 1 nm auf, beispielsweise 0,1 nm bis 0,5 nm. Die Blockerschicht ist bevorzugt auf Basis von Titan oder einer Nickel-Chrom-Legierung ausgebildet.

Die Blockerschicht ändert die optischen Eigenschaften der elektrisch leitfähigen Beschichtung nur unwesentlich und ist bevorzugt bei allen vorstehend beschriebenen Ausgestaltungen vorhanden. Besonders bevorzugt ist jeweils eine Blockerschicht direkt oberhalb der Silberschicht angeordnet, also zwischen Silberschicht und nachfolgender dielektrischer Schicht(enfolge), wo sie besonders effektiv ist. Es ergeben sich folgende bevorzugte Schichtenfolgen im ersten Flächenbereich der elektrisch leitfähigen Beschichtung (jeweils ausgehend vom Substrat, also derjenigen Oberfläche, auf die die elektrisch leitfähige Beschichtung abgeschieden ist):
- erste Entspiegelungsschicht - erste Silberschicht - erste Blockerschicht - zweite Entspiegelungsschicht
- erste Entspiegelungsschicht - erste Silberschicht - erste Blockerschicht - zweite Anpassungsschicht - zweite Entspiegelungsschicht
- erste Entspiegelungsschicht - erste Silberschicht - erste Blockerschicht - zweite Anpassungsschicht - zweite brechungsindexsteigernde Schicht - zweite Entspiegelungsschicht
- erste Entspiegelungsschicht - erste Anpassungsschicht - erste Silberschicht - erste Blockerschicht - zweite Entspiegelungsschicht
- erste Entspiegelungsschicht - erste Anpassungsschicht - erste Silberschicht - erste Blockerschicht - zweite Anpassungsschicht - zweite Entspiegelungsschicht
- erste Entspiegelungsschicht - erste Anpassungsschicht - erste Silberschicht - erste Blockerschicht - zweite Anpassungsschicht - zweite brechungsindexsteigernde Schicht - zweite Entspiegelungsschicht
- erste Entspiegelungsschicht - erste brechungsindexsteigernde Schicht - erste Anpassungsschicht - erste Silberschicht - erste Blockerschicht - zweite Entspiegelungsschicht
- erste Entspiegelungsschicht - erste brechungsindexsteigernde Schicht - erste Anpassungsschicht - erste Silberschicht - erste Blockerschicht - zweite Anpassungsschicht - zweite Entspiegelungsschicht
- erste Entspiegelungsschicht - erste brechungsindexsteigernde Schicht - erste Anpassungsschicht - erste Silberschicht - erste Blockerschicht - zweite Anpassungsschicht - zweite brechungsindexsteigernde Schicht - zweite Entspiegelungsschicht

Es kann jeweils optional eine zusätzliche Blockerschicht direkt unterhalb jeder der Silberschichten angeordnet sein, also jeweils zwischen Silberschicht und darunterliegender dielektrischer Schicht(enfolge).

Der Projektor ist innenraumseitig der Verbundscheibe angeordnet und bestrahlt die Verbundscheibe über die innenraumseitige Oberfläche der Innenscheibe. Er ist auf den HUD-Bereich gerichtet und bestrahlt diesen zur Erzeugung der HUD-Projektion. Ist die Verbundscheibe eine Windschutzscheibe, so ist der Projektor im Fahrzeuginnenraum angeordnet. Die Strahlung des Projektors ist erfindungsgemäß überwiegend p-polarisiert, weißt also einen p-polarisierten Strahlungsanteil von größer als 50% auf. Je höher der Anteil der p-polarisierten Strahlung an der Gesamtstrahlung des Projektors ist, desto intensitätsstärker ist das gewünschte Projektionsbild und desto intensitätsschwächer sind unerwünschte Reflexionen an den Oberflächen der Verbundscheibe. Der p-polarisierte Strahlungsanteil des Projektors beträgt bevorzugt mindestens 70%, besonders bevorzugt mindestens 80% und insbesondere mindestens 90%. In einer besonders vorteilhaften Ausgestaltung ist die Strahlung des Projektors im Wesentlichen rein p-polarisiert ist - der p-polarisierte Strahlungsanteil beträgt also 100% oder weicht nur unwesentlich davon ab. Die Angabe der Polarisationsrichtung bezieht sich dabei auf die Einfallsebene der Strahlung auf der Verbundscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Verbundscheibe im geometrischen Zentrum des bestrahlten Bereichs aufgespannt.

Die Strahlung des Projektors trifft bevorzugt mit einem Einfallswinkel von 45° bis 70°, insbesondere von 60° bis 70° auf die Verbundscheibe. Insbesondere bei Verwendung der Verbundscheibe als Windschutzscheibe sind diese Winkel bevorzugt. In einer vorteilhaften Ausgestaltung weicht der Einfallswinkel um höchstens 10° vom Brewsterwinkel ab. Die p-polarisierte Strahlung wird dann nur unwesentlich an den Oberflächen der Verbundscheibe reflektiert, so dass kein Geisterbild erzeugt wird. Der Einfallswinkel ist der Winkel zwischen dem Einfallsvektor der Projektorstrahlung und der innenraumseitigen Flächennormale (also die Flächennormale auf die innenraumseitige externe Oberfläche der Verbundscheibe) im geometrischen Zentrum des HUD-Bereichs. Der Brewsterwinkel für einen Luft-Glas-Übergang im Falle von Kalk-Natron-Glas, das für Fensterscheiben allgemein üblich ist, beträgt 56,5°. Idealerweise sollte der Einfallswinkel diesem Brewster-Winkel möglichst nahekommen. Es können aber beispielsweise auch Einfallswinkel von 65° verwendet werden, die für HUD-Projektionsanordnungen üblich sind, in Fahrzeugen problemlos zu realisieren sind und nur in einem geringen Maße vom Brewsterwinkel abweichen, so dass die Reflexion der p-polarisierten Strahlung nur unwesentlich zunimmt.

Da die Reflexion der Projektorstrahlung im Wesentlichen an der elektrisch leitfähigen Beschichtung erfolgt und nicht an den externen Scheibenoberflächen, ist es nicht nötig, die externen Scheibenoberflächen in einem Winkel zueinander anzuordnen, um Geisterbilder zu vermeiden. Die externen Oberflächen der Verbundscheibe sind daher bevorzugt im Wesentlichen parallel zueinander angeordnet. Die thermoplastische Zwischenschicht ist dazu bevorzugt nicht keilartig ausgebildet, sondern weist eine im Wesentlichen konstante Dicke auf, insbesondere auch im vertikalen Verlauf zwischen der Oberkante und der Unterkante der Verbundscheibe, ebenso wie die Innenscheibe und die Außenscheibe. Eine keilartige Zwischenschicht würde dagegen im vertikalen Verlauf zwischen Unterkante und Oberkante der Verbundscheibe eine veränderliche, insbesondere zunehmende Dicke aufweisen. Die Zwischenschicht ist typischerweise aus mindestens einer thermoplastischen Folie ausgebildet. Da Standardfolien deutlich kostengünstiger sind als Keilfolien, wird die Herstellung der Verbundscheibe günstiger gestaltet.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm.

Die Außenscheibe, die Innenscheibe und die thermoplastische Zwischenschicht können klar und farblos, aber auch getönt oder gefärbt sein. Die Gesamttransmission durch Verbundscheibe (samt Reflexionsbeschichtung) beträgt in einer bevorzugten Ausgestaltung größer 70%. Damit ist die Verbundscheibe als Windschutzscheibe eines Kraftfahrzeugs geeignet. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

In einer vorteilhaften Ausgestaltung ist die Außenscheibe getönt oder gefärbt. Dadurch kann die außenseitige Reflektivität der Verbundscheibe, insbesondere im ersten Flächenbereich, verringert werden, wodurch der Eindruck der Scheibe angenehmer gestaltet wird für einen äußeren Betrachter. Um allerdings die vorgeschriebene Lichttransmission von 70% für Windschutzscheiben zu gewährleisten (Gesamttransmission), sollte die Außenscheibe bevorzugt eine Lichttransmission von mindestens 80% aufweisen, besonders bevorzugt von mindestens 85%. Die Innenscheibe und die Zwischenschicht sind bevorzugt klar, also nicht getönt oder gefärbt. Beispielsweise kann grün oder blau gefärbtes Glas als Außenscheibe eingesetzt werden.

Die Verbundscheibe ist bevorzugt eine Windschutzscheibe, die besonders bevorzugt in einer oder in mehreren Richtungen des Raumes gebogen ist, wie es für Kraftfahrzeugscheiben üblich ist, wobei typische Krümmungsradien im Bereich von etwa 10 cm bis etwa 40 m liegen. Die Windschutzscheibe kann aber auch plan sein, beispielsweise wenn es als Scheibe für Busse, Züge oder Traktoren vorgesehen ist.

Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die thermoplastische Zwischenschicht kann eine oder mehrere thermoplastische Verbundfolien umfassen. Die Dicke der Zwischenschicht beträgt bevorzugt von 0,2 mm bis 2 mm, besonders bevorzugt von 0,3 mm bis 1 mm, beispielsweise 0,76 mm.

Die Erfindung umfasst des Weiteren ein Verfahren zur Herstellung einer erfindungsgemäßen Projektionsanordnung. Dabei wird zunächst eine Außenscheibe mit einer außenseitigen Oberfläche und einer innenseitigen Oberfläche oder eine Innenscheibe mit einer außenseitigen Oberfläche und einer innenseitigen Oberfläche bereitgestellt. Die elektrisch leitfähige Beschichtung wird wahlweise auf der innenseitigen Oberfläche der Innenscheibe oder der Außenscheibe abgeschieden. Die elektrisch leitfähige Beschichtung umfasst dabei zumindest eine erste dielektrische Schicht oder Schichtenfolge, eine erste elektrisch leitfähige Schicht auf Basis von Silber, eine zweite dielektrische Schicht oder Schichtenfolge, eine zweite elektrisch leitfähige Schicht auf Basis von Silber und eine dritte dielektrische Schicht oder Schichtenfolge. Innerhalb des ersten Flächenbereichs wird ein Teil des Schichtstapels der elektrisch leitfähigen Beschichtung wieder abgetragen, wobei danach zumindest in einem Teilbereich des ersten Flächenbereichs die elektrisch leitfähige Beschichtung aus in dieser Reihenfolge einer ersten dielektrischen Schicht oder Schichtenfolge, einer ersten elektrisch leitfähigen Schicht auf Basis von Silber und einer zweiten dielektrischen Schicht oder Schichtenfolge besteht. Weitere elektrisch leitfähige Schichten sind in diesem Teilbereich des ersten Flächenbereichs nicht vorhanden. Die mit der elektrisch leitfähigen Beschichtung beschichtete Außenscheibe oder Innenscheibe mit entsprechend reduziertem Schichtstapel der Beschichtung im ersten Flächenbereich wird daraufhin mit einer Innenscheibe beziehungsweise Außenscheibe zu einer Verbundscheibe verbunden. Dazu wird auf die innenseitige Oberfläche der Innenscheibe oder auf die innenseitige Oberfläche der Außenscheibe eine thermoplastische Zwischenschicht aufgelegt. Eine der genannten innenseitigen Oberflächen trägt dabei bereits die elektrisch leitfähige Beschichtung, so dass diese in Richtung der thermoplastischen Zwischenschicht weist. Der aus Scheibe und thermoplastischer Zwischenschicht gebildete Stapel wird mit einer Innenscheibe oder Außenscheibe abgeschlossen und der entstandene Schichtstapel aus Innenscheibe, thermoplastischer Zwischenschicht und Außenscheibe zu einer Verbundscheibe laminiert. Zur Herstellung der Projektionsanordnung wird ein Projektor bereitgestellt, dessen Strahlung überwiegend p-polarisiert ist. Der Projektor wird so ausgerichtet, dass bei Betrieb des Projektors dessen p-polarisierte Strahlung auf den ersten Flächenbereich der elektrisch leitfähigen Beschichtung trifft.

Die Verbundscheibe kann hergestellt werden durch an sich bekannte Verfahren. Die Außenscheibe und die Innenscheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Die elektrisch leitfähige Beschichtung wird bevorzugt durch physikalische Gasphasenabscheidung (PVD) auf eine Scheibenoberfläche aufgebracht, besonders bevorzugt durch Kathodenzerstäubung ("Sputtern"), ganz besonders bevorzugt durch magnetfeldunterstütze Kathodenzerstäubung ("Magnetronsputtern"). Die Beschichtung wird bevorzugt vor der Lamination aufgebracht. Statt die Beschichtung auf eine Scheibenoberfläche aufzubringen, kann sie grundsätzlich auch auf einer Trägerfolie bereitgestellt werden, die in der Zwischenschicht angeordnet wird.

Das Abtragen von Schichten der elektrisch leitfähigen Beschichtung innerhalb des ersten Flächenbereichs erfolgt bevorzugt mittels Laserverfahren, besonders bevorzugt Laserablation. Dazu wird der Laser auf eine der zu entfernenden Schichten der elektrisch leitfähigen Beschichtung fokussiert und bevorzugt mittels einer Scanneranordnung über die Beschichtung geführt. Der Laserstrahl wird dabei von Schichten des Schichtstapels, beispielsweise einer silberbasierten Schicht oder Blockerschicht, absorbiert. Die betreffende Schicht sowie die darüber liegenden Schichten werden durch Abplatzen entfernt, während die darunter liegenden Schichten erhalten bleiben. Auf diese Weise werden die zu entfernenden Schichten der elektrisch leitfähigen Beschichtung abgetragen. Substrat und Laserstrahl führen eine Relativbewegung zueinander aus, wobei wahlweise der Laserstrahl und/oder das Werkstück bewegt werden können. Geeignete Laserscanner sind kommerziell erhältlich und ermöglichen eine gezielte Führung des Laserstrahls über das stationäre oder ebenfalls bewegliche Werkstück. Bevorzugt wird als Laser ein gepulster Festkörperlaser eingesetzt. Es hat sich als vorteilhaft erwiesen die Wellenlänge der Strahlung des Lasers im Bereich von 150 nm bis 1200 nm, bevorzugt im Bereich von 300 nm bis 1200 nm, besonders bevorzugt 400 nm bis 1100 nm, zu wählen. Dieser Bereich ist zur Bearbeitung der elektrisch leitfähigen Beschichtung besonders geeignet. Bevorzugt wird ein Festkörper-Laser verwendet, besonders bevorzugt ein IR-Laser, beispielsweise mit einer Wellenlänge von 1064 nm oder einer höheren Harmonischen dieser Wellenlänge, z.B. 532 nm. Der Laser wird gepulst betrieben. Das ist besonders vorteilhaft im Hinblick auf eine hohe Leistungsdichte und eine effektive Entfernung der Beschichtung. Die Pulsenergie beträgt beispielsweise 10 µJ bis 50 µJ pro Puls. Die Pulswiederholrate beträgt bevorzugt 10.000 bis 400.000 Hz, beispielsweise 25.000 Hz. Die Scangeschwindigkeit wird dabei bevorzugt zwischen 0,01 m/s und 5 m/s gewählt. Die Pulsdauer des Lasers beträgt bevorzugt kleiner oder gleich 20 ns, besonders bevorzugt kleiner oder gleich 10 ps, insbesondere kleiner oder gleich 400 fs.

Das teilweise Abtragen des Schichtstapels der elektrisch leitfähigen Beschichtung erfolgt bevorzugt nachdem sämtliche Schichten der elektrisch leitfähigen Beschichtung aufgetragen wurden. Alternativ dazu können auch während des Abscheideprozesses Schichten entfernt werden. Dazu wird zwischen den einzelnen Abscheidungsschritten ein abrasiver Schritt zwischengeschaltet, in dem innerhalb des ersten Flächenbereichs eine oder mehrere der Schichten wieder abgetragen werden. Beispielsweise wird zunächst eine elektrisch leitfähige Beschichtung umfassend eine, zwei oder drei elektrisch leitfähige Schichten auf Basis von Silber, sowie die entsprechenden dielektrischen Schichten, großflächig auf der Scheibenoberfläche abgeschieden. Danach wird im HUD-Bereich der Scheibe die soeben aufgetragene elektrisch leitfähige Beschichtung vollständig entfernt. Abschließend wird ebenfalls großflächig auf der Scheibenoberfläche ein Schichtstapel umfassend genau eine elektrisch leitfähige Schicht basierend auf Silber, sowie die erforderlichen dielektrischen Schichten, abgeschieden. Daraus ergibt sich im ersten Flächenbereich eine elektrisch leitfähige Beschichtung bestehend aus einer ersten dielektrischen Schicht oder Schichtenfolge, genau einer elektrisch leitfähigen Schicht und einer zweiten dielektrischen Schicht oder Schichtenfolge. Im zweiten Flächenbereich liegt hingegen eine elektrisch leitfähige Beschichtung umfassend zwei, drei oder vier elektrisch leitfähige Schichten vor. Als genannte abrasive Schritte können beispielsweise ionenstrahlbasierte Ätzschritte oder Laserablation verwendet werden. Die Beschichtung erfolgt bevorzugt mittels magnetfeldunterstützer Kathodenzerstäubung. Die Entschichtung kann wahlweise außerhalb der Beschichtungsanlage oder innerhalb eines abgetrennten Abschnitts innerhalb der Beschichtungsanlage erfolgen.

Ist die elektrisch leitfähige Beschichtung als heizbare Beschichtung vorgesehen, so wird diese elektrisch kontaktiert. Dazu werden Sammelleiter auf die Beschichtung aufgebracht, die über elektrische Anschlusselemente und Kabel ermöglichen die Beschichtung mit einer Spannungsquelle elektrisch leitend zu verbinden. Sammelleiter zur elektrischen Kontaktierung der Beschichtung, deren Anordnung auf einer elektrisch leitfähigen Beschichtung und Verfahren zum Aufbringen der Sammelleiter sind dem Fachmann hinlänglich bekannt. Die Sammelleiter werden bevorzugt in Form einer aufgedruckten und eingebrannten leitfähigen Struktur realisiert. Die aufgedruckten Sammelleiter enthalten zumindest ein Metall, bevorzugt Silber. Geeignete Silberdruckpasten sind kommerziell erhältlich und dem Fachmann bekannt.

Soll die Verbundscheibe gebogen sein, so werden die Außenscheibe und die Innenscheibe bevorzugt vor der Lamination und bevorzugt nach dem Beschichtungsprozess einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C. Diese Temperaturbehandlung erhöht auch die Transparenz und verringert den Flächenwiderstand der elektrisch leitfähigen Beschichtung.

Die im Zuge der Beschreibung des Verfahrens erläuterten Produktmerkmale gelten auch für die Projektionsanordnung und die Verbundscheibe, während umgekehrt die bei Beschreibung der Projektionsanordnung und Verbundscheibe erwähnten Merkmale auch für das Verfahren gelten.

Die Erfindung umfasst außerdem die Verwendung einer erfindungsgemäß ausgebildeten Projektionsanordnung für ein Head-Up-Display eines Kraftfahrzeugs, wobei die Verbundscheibe die Windschutzscheibe des Kraftfahrzeugs darstellt und der Projektor, dessen Strahlung überwiegend p-polarisiert ist, auf den HUD-Bereich gerichtet ist. Die vorstehend beschriebenen bevorzugten Ausgestaltungen gelten für die Verwendung entsprechend.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Verbundscheibe einer gattungsgemäßen Projektionsanordnung,
- Fig. 2: einen Querschnitt durch eine gattungsgemäße Projektionsanordnung,
- Fig. 3: einen Querschnitt durch eine Verbundscheibe einer erfindungsgemäßen Projektionsanordnung,
- Fig. 4a: die Schichtenfolge einer erfindungsgemäßen Ausgestaltung der elektrisch leitfähigen Beschichtung 20 innerhalb des ersten Flächenbereichs 20.1,
- Fig. 4b: die Schichtenfolge einer erfindungsgemäßen Ausgestaltung der elektrisch leitfähigen Beschichtung 20 innerhalb des zweiten Flächenbereichs 20.2,
- Fig. 5a: eine Verbundscheibe 10 einer erfindungsgemäßen Projektionsanordnung mit ersten Bereichen 26a und zweiten Bereichen 26b innerhalb des ersten Flächenbereichs 20.1 innerhalb des vergrößert dargestellten Ausschnitts Z,
- Fig. 5b: eine weitere Verbundscheibe 10 einer erfindungsgemäßen Projektionsanordnung mit ersten Bereichen 26a und zweiten Bereichen 26b innerhalb des ersten Flächenbereichs 20.1 innerhalb des vergrößert dargestellten Ausschnitts Z,
- Fig. 6a: Transmissionsspektrum der Verbundscheibe 10 gemäß Tabelle 1 im zweiten Flächenbereich 20.2,
- Fig. 6b: Transmissionsspektrum der Verbundscheibe 10 gemäß Tabelle 1 im ersten Flächenbereich 20.1,
- Fig. 7a: Reflexionsspektrum der Verbundscheibe 10 gemäß Tabelle 1 gegenüber p-polarisierter Strahlung im zweiten Flächenbereich 20.2 und
- Fig. 7b: Reflexionsspektrum der Verbundscheibe 10 gemäß Tabelle 1 gegenüber p-polarisierter Strahlung im ersten Flächenbereich 20.1.

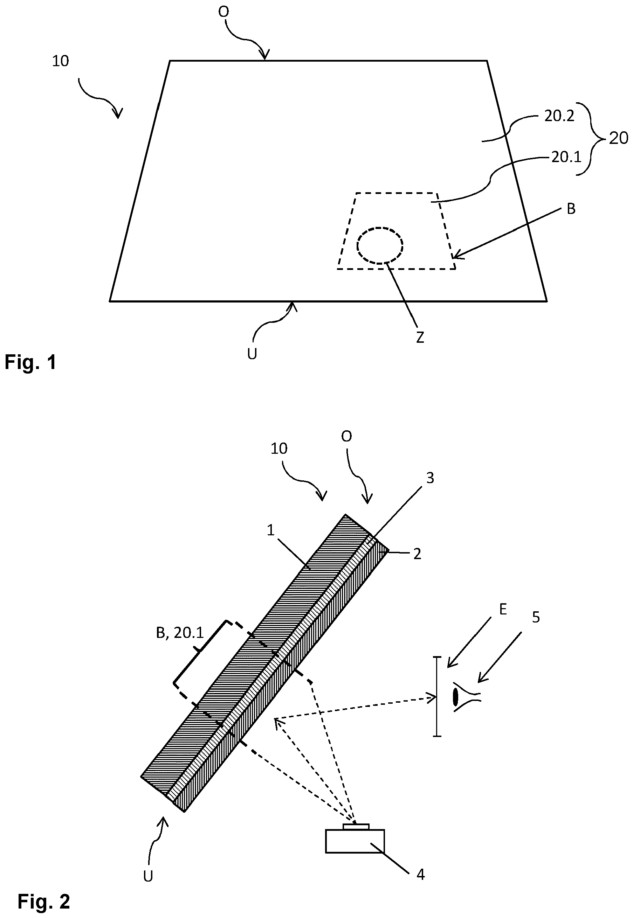

Fig. 1 und Fig. 2 zeigen je ein Detail einer gattungsgemäßen Projektionsanordnung für ein HUD. Die Projektionsanordnung umfasst eine Verbundscheibe 10 als Windschutzscheibe, insbesondere die Windschutzscheibe eines Personenkraftwagens. Die Projektionsanordnung umfasst außerdem einen Projektor 4, welcher auf einen Bereich der Verbundscheibe 10 gerichtet ist. In diesem Bereich, der üblicherweise als HUD-Bereich B bezeichnet wird, können durch den Projektor 4 Bilder erzeugt werden, welche von einem Betrachter 5 (Fahrer) als virtuelle Bilder auf der von ihm abgewandten Seite der Verbundscheibe 10 wahrgenommen werden, wenn sich seine Augen innerhalb der sogenannten Eyebox E befinden.

Die Verbundscheibe 10 ist aufgebaut aus einer Außenscheibe 1 und einer Innenscheibe 2, die über eine thermoplastische Zwischenschicht 3 miteinander verbunden sind. Ihre Unterkante U ist nach unten in Richtung des Motors des Personenkraftwagens angeordnet, ihre Oberkante O nach oben in Richtung des Dachs. Die Außenscheibe 1 ist in Einbaulage der äußeren Umgebung zugewandt, die Innenscheibe 2 dem Fahrzeuginnenraum. Die Verbundscheibe 10 umfasst eine elektrisch leitfähige Beschichtung 20, die einen ersten Flächenbereich 20.1 innerhalb des HUD-Bereichs B und einen zweiten Flächenbereich 20.2 außerhalb des HUD-Bereichs B umfasst.

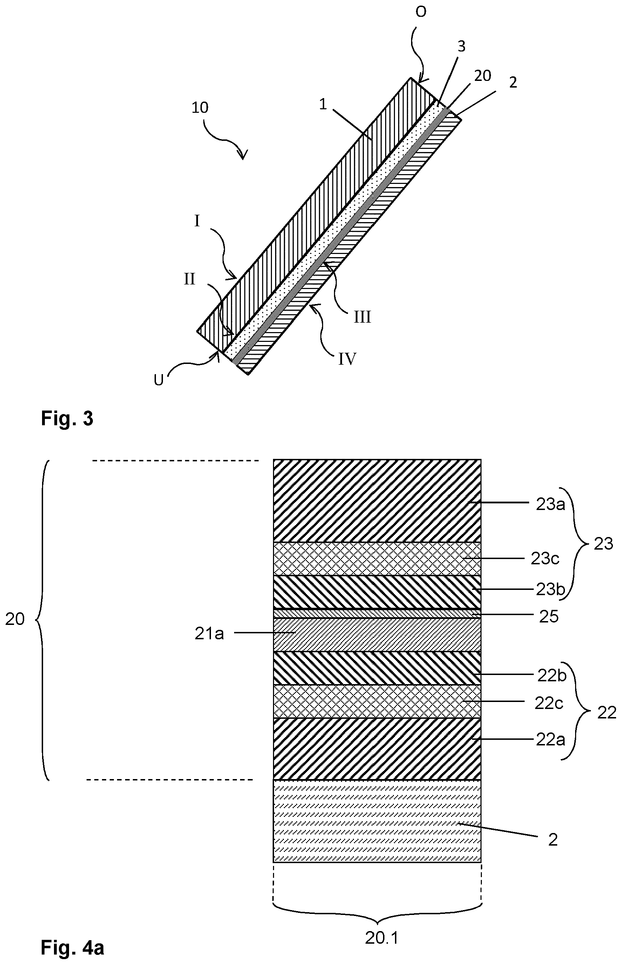

Fig. 3 zeigt eine Ausgestaltung einer erfindungsgemäß ausgebildeten Verbundscheibe 10 als Windschutzscheibe eines Kraftfahrzeugs. Die Außenscheibe 1 weist eine außenseitige Oberfläche I auf, die in Einbaulage der äußeren Umgebung zugewandt ist, und eine innenraumseitige Oberfläche II, die in Einbaulage dem Innenraum zugewandt ist. Ebenso weist die Innenscheibe 2 eine außenseitige Oberfläche III auf, die in Einbaulage der äußeren Umgebung zugewandt ist, und eine innenraumseitige Oberfläche IV, die in Einbaulage dem Innenraum zugewandt ist. Die Außenscheibe 1 und die Innenscheibe 2 bestehen beispielsweise aus Kalk-Natron-Glas. Die Außenscheibe 1 weist beispielsweise eine Dicke von 2,1 mm auf, die Innenscheibe 2 eine Dicke von 1,6 mm oder2,1 mm. Die Zwischenschicht 3 ist beispielsweise aus einer PVB-Folie ausgebildet mit einer Dicke von 0,76 mm. Die PVB-Folie weist eine im Wesentlichen konstante Dicke auf, abgesehen von einer etwaigen fachüblichen Oberflächenrauigkeit - sie ist nicht als sogenannte Keilfolie ausgebildet.

Die außenseitige Oberfläche III der Innenscheibe 2 ist mit einer erfindungsgemäßen elektrisch leitfähigen Beschichtung 20 versehen, die innerhalb des ersten Flächenbereichs 20.1 gemäß Figur 1 als Reflexionsfläche für die Projektorstrahlung und zusätzlich innerhalb des zweiten Flächenbereichs 20.2 gemäß Figur 1 als IR-reflektierende Beschichtung vorgesehen ist.

Der Strahlung des Projektors 4 ist erfindungsgemäß p-polarisiert, insbesondere im Wesentlichen rein p-polarisiert. Da der Projektor 4 die Verbundscheibe 10 als Windschutzscheibe mit einem Einfallswinkel von etwa 65° bestrahlt, der nahe dem Brewster-Winkel liegt, wird die Strahlung des Projektors nur unwesentlich an den externen Oberflächen I, IV der Verbundscheibe 10 reflektiert. Die erfindungsgemäße elektrisch leitfähige Beschichtung 20 dagegen ist innerhalb des ersten Flächenbereichs 20.1 auf die Reflexion p-polarisierter Strahlung optimiert. Sie dient als Reflexionsfläche für die Strahlung des Projektors 4 zur Erzeugung der HUD-Projektion.

Fig. 4a zeigt die Schichtenfolge einer Ausgestaltung der elektrisch leitfähigen Beschichtung 20 innerhalb des ersten Flächenbereichs 20.1. Die Beschichtung 20 ist ein Stapel von Dünnschichten und umfasst genau eine elektrisch leitfähige Schicht 21a auf Basis von Silber.

Weitere elektrisch leitfähige Schichten sind im ersten Flächenbereich 20.1 der Beschichtung 20 nicht vorhanden. Direkt oberhalb der ersten elektrisch leitfähigen Schicht 21a ist eine metallische Blockerschicht 25 angeordnet. Darüber ist eine zweite dielektrische Schichtenfolge 23 angeordnet, die von unten nach oben aus einer zweiten Anpassungsschicht 23b, einer zweiten brechungsindexsteigernden Schicht 23c und einer zweiten Entspiegelungsschicht 23a besteht. Unterhalb der ersten elektrisch leitfähigen Schicht 21a ist eine erste dielektrische Schichtenfolge 22 angeordnet, die von oben nach unten aus einer ersten Anpassungsschicht 22b, einer ersten brechungsindexsteigernden Schicht 22c und einer ersten Entspiegelungsschicht 22a besteht.

Der dargestellte Schichtaufbau ist lediglich beispielhaft zu versehen. So können die dielektrischen Schichtenfolgen auch mehr oder weniger Schichten umfassen, solange mindestens eine dielektrische Schicht oberhalb und unterhalb der ersten leitfähigen Schicht 21a vorhanden ist. Die dielektrischen Schichtenfolgen müssen auch nicht symmetrisch sein. Beispielhafte Materialien und Schichtdicken können dem nachfolgenden Beispiel entnommen werden.

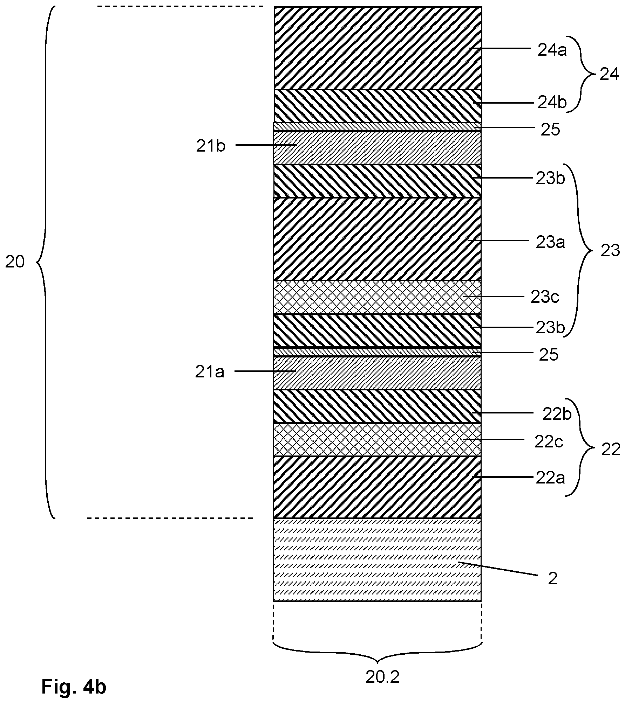

Fig. 4b zeigt die Schichtenfolge einer Ausgestaltung der elektrisch leitfähigen Beschichtung 20 innerhalb des zweiten Flächenbereichs 20.2. Die Beschichtung 20 ist ein Stapel von Dünnschichten und umfasst eine erste dielektrische Schichtenfolge 22, die von unten nach oben, also vom Substrat (hier Innenscheibe 2) ausgehend, nach unten aus einer ersten Entspiegelungsschicht 22a, einer ersten brechungsindexsteigernden Schicht 22c und einer ersten Anpassungsschicht 22b besteht. Auf diese dielektrische Schichtenfolge 22 folgt die erste elektrisch leitfähige Schicht 21a auf Basis von Silber. Direkt oberhalb der ersten elektrisch leitfähigen Schicht 21a ist eine metallische Blockerschicht 25 angeordnet. Darüber ist eine zweite dielektrische Schichtenfolge 23 angeordnet, die von unten nach oben eine zweite Anpassungsschicht 23b, eine zweite brechungsindexsteigernde Schicht 23c und eine zweite Entspiegelungsschicht 23a umfasst. Insoweit aufgezählt entspricht der Schichtaufbau der elektrisch leitfähigen Beschichtung 20 im zweiten Flächenbereich 20.2 dem in Figur 4a beschriebenen Schichtaufbau im ersten Flächenbereich 20.1. Im zweiten Flächenbereich 20.2 gemäß Figur 4b ist auf der zweiten Entspiegelungsschicht 23a eine weitere zweite Anpassungsschicht 23b angeordnet, so dass die zweite dielektrische Schichtenfolge 23 im zweiten Flächenbereich 20.2 aus von unten nach oben einer zweiten Anpassungsschicht 23b, einer zweiten brechungsindexsteigernden Schicht 23c, einer zweiten Entspiegelungsschicht 23a und einer weiteren zweiten Anpassungsschicht 23b besteht. Auf die weitere zweite Anpassungsschicht 23b folgt eine zweite leitfähige Schicht 21b auf Basis von Silber mit einer darauf befindlichen Blockerschicht 25. Oberhalb der zweiten leitfähigen Schicht 21b schließt der Schichtstapel der Beschichtung mit einer dritten dielektrischen Schicht 24 ab. Die dritte dielektrische Schicht 24 besteht aus in dieser Reihenfolge von unten nach oben einer dritten Anpassungsschicht 24b und einer dritten Entspiegelungsschicht 24a, die den Schichtstapel abschließt.

Der Schichtaufbau der elektrisch leitfähigen Beschichtung 20 im ersten Flächenbereich 20.1 (gemäß Figur 4a) wurde erzeugt, indem zunächst der Schichtaufbau gemäß Figur 4b großflächig auf der innenseitigen Oberfläche der Innenscheibe 2 mittels Magnetronsputtern aufgebracht wurde und daraufhin in einem ersten Flächenbereich 4.1 die dritte dielektrische Schicht 24, die zweite elektrisch leitfähige Schicht 21b mit zugehöriger Blockerschicht 25 und die unter der zweiten elektrisch leitfähigen Schicht 21b liegende weitere zweite Anpassungsschicht 23b mittels Laserablation entfernt werden.

Der dargestellte Schichtaufbau ist lediglich beispielhaft zu versehen. So können die dielektrischen Schichtenfolgen auch mehr oder weniger Schichten umfassen, solange jeweils mindestens eine dielektrische Schicht oberhalb und unterhalb der ersten leitfähigen Schicht 21a vorhanden ist. Die dielektrischen Schichtenfolgen müssen auch nicht symmetrisch sein. Beispielhafte Materialien und Schichtdicken können dem nachfolgenden Beispiel entnommen werden.

Die jeweiligen Schichtenfolgen einer erfindungsgemäßen Verbundscheibe 10 mit elektrisch leitfähiger Beschichtung 20 auf der innenseitigen Oberfläche III der Innenscheibe 2 innerhalb des ersten Flächenbereichs 20.1 und des zweiten Flächenbereichs 20.2 sind, zusammen mit den Materialien und geometrische Schichtdicken der Einzelschichten, in Tabelle 1 dargestellt. Die dielektrischen Schichten können unabhängig voneinander dotiert sein, beispielsweise mit Bor oder Aluminium.

**Tabelle 1**

| Material | Bezugszeichen | | Schichtdicken | |
|---|---|---|---|---|
| | | | erster Flächenbereich 20.1 | zweiter Flächenbereich 20.2 |
| Kalk-Natron-Glas | 1 | | 2,1 mm | 2,1 mm |
| PVB | 3 | | 0,76 mm | 0,76 mm |
| Si₃N₄ | 20 | 24a | - | 29,0 nm |
| ZnO | | 24b | - | 10,0 nm |
| NiCr | | 25 | - | 0,3 nm |
| **Ag** | | **21b** | - | **8,0 nm** |
| ZnO | | 23b | - | 10,0 nm |
| Si₃N₄ | | 23a | 49,3 nm | 49,3 nm |
| SiZrNₓ | | 23c | 10,0 nm | 10,0 nm |
| ZnO | | 23b | 10,0 nm | 10,0 nm |
| NiCr | | 25 | 0,3 nm | 0,3 nm |
| **Ag** | | **21a** | **12,0 nm** | **12,0 nm** |
| ZnO | | 22b | 10,0 nm | 10,0 nm |
| SiZrNₓ | | 22c | 10,0 nm | 10,0 nm |
| Si₃N₄ | | 22a | 10,2 nm | 10,2 nm |
| Kalk-Natron-Glas | 2 | | 2,1 mm | 2,1 mm |

Die Transmissions- und Reflektionseigenschaften sowie die Farbwerte der Verbundscheibe 10 aus Tabelle 1 im ersten Flächenbereich 20.1 und im zweiten Flächenbereich 20.2 der elektrisch leitfähigen Beschichtung 20 sind in Tabelle 2 gegeben. *TLA* bezeichnet dabei die Transmission im sichtbaren Bereich des Lichtspektrums und *RL(A)* die Reflektion im sichtbaren Bereich des Lichtspektrums gemessen unter einem Winkel von 8° an der außenseitigen Oberfläche I der Außenscheibe 1. Darüber hinaus wird die solare Gesamttransmission gemessen nach DIN ISO13831 als *TTS* bezeichnet. Die für die Bildqualität wesentliche Reflektivität für p-polarisiertes Licht wird mit *RL(A) p-pol* bezeichnet und an der außenseitigen Oberfläche IV der Innenscheibe 2 unter 65° bestimmt. Ob ein vorteilhafter neutraler Farbeindruck des HUD-Bildes besteht kann über die entsprechenden Farbwerte *a*p-pol* und *b*p-pol* ermittelt werden.

**Tabelle 2**

| | Eigenschaften Verbundscheibe 10 gemäß Tabelle 1 | |
|---|---|---|
| | erster Flächenbereich 20.1 | zweiter Flächenbereich 20.2 |
| TLA | 73,9 | 82,0 |
| RL(A) | 20,9 | 9,6 |
| RL(A)p-pol | 18,7 | 5,9 |
| a*p-pol | 1,3 | 19,0 |
| b*p-pol | 3,0 | -19,9 |
| TTS | 60,2 | 54,7 |

Ein Vergleich der Eigenschaften der elektrisch leitfähigen Beschichtung 20 im ersten Flächenbereich 20.1 und im zweiten Flächenbereich 20.2 zeigt, dass in beiden Bereichen eine für die Verwendung als Windschutzscheibe geeignet hohe Transmission von größer als 70% im sichtbaren Bereich des Spektrums erreicht werden konnte. Im zweiten Flächenbereich 20.2 besteht eine vorteilhaft niedrige Reflektion RL(A) an der außenseitigen Oberfläche I der Außenscheibe 1, so dass die elektrisch leitfähige Beschichtung im zweiten Flächenbereich 20.2 gut für eine großflächige Anwendung auf der Scheibe geeignet ist. Ferner ist im zweiten Flächenbereich 20.2 eine vorteilhaft niedrige solare Gesamttransmission zu beobachten. Im zweiten Flächenbereich 20.2 besitzt die Verbundscheibe 10 eine vergleichsweise niedrige Reflektivität für p-polarisiertes Licht und zeigt ein farbig wirkendes HUD-Bild. Der erste Flächenbereich 20.1 der Beschichtung 20 ist für die Verwendung im HUD-Bereich der Scheibe optimiert. In diesem Bereich ist eine vorteilhaft hohe Reflektivität für p-polarisiertes Licht zu beobachten und ein HUD-Bild mit neutralem Farbeindruck wird erhalten.

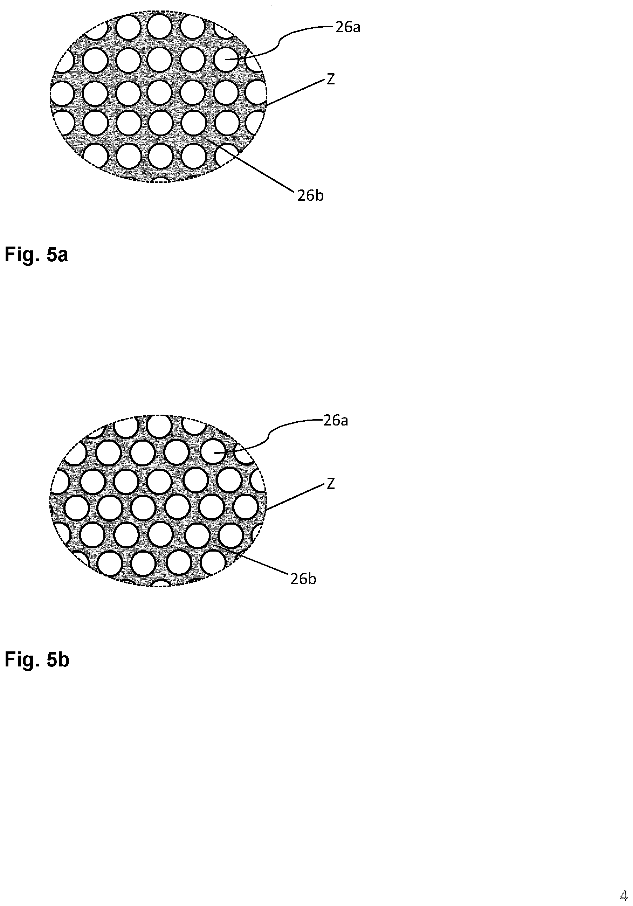

Fig. 5a zeigt eine Ausführungsform der Verbundscheibe 10 einer erfindungsgemäßen Projektionsanordnung innerhalb des vergrößert dargestellten Ausschnitts Z gemäß Fig. 1. Die Verbundscheibe 10 entspricht im Wesentlichen der in Figur 3 beschriebenen. Im Unterschied dazu ist der erste Flächenbereich 20.1 mit ersten Bereichen 26a und zweiten Bereichen 26b versehen. Die ersten Bereiche 26a weisen eine Schichtfolge der elektrisch leitfähigen Beschichtung 20 auf, die der in Figur 4a beschriebenen entspricht. Die zweiten Bereiche 26b ergeben eine zusammenhängende Fläche, die die ersten Bereiche 26a umgibt und weisen den in Figur 4b beschriebenen Schichtstapel der elektrisch leitfähigen Beschichtung auf. Die ersten Bereiche 26b sind in Form eines quadratischen Rasters angeordnet.

Fig. 5b zeigt eine weitere Ausführungsform der Verbundscheibe 10 einer erfindungsgemäßen Projektionsanordnung, ebenfalls dargestellt innerhalb des vergrößerten Ausschnitts Z gemäß Figur 1. Die Verbundscheibe der Figur 5b entspricht im Wesentlichen der Verbundscheibe der Figur 5a, wobei im Unterschied dazu die ersten Bereiche 26a in Form eines hexagonalen Rasters angeordnet sind.

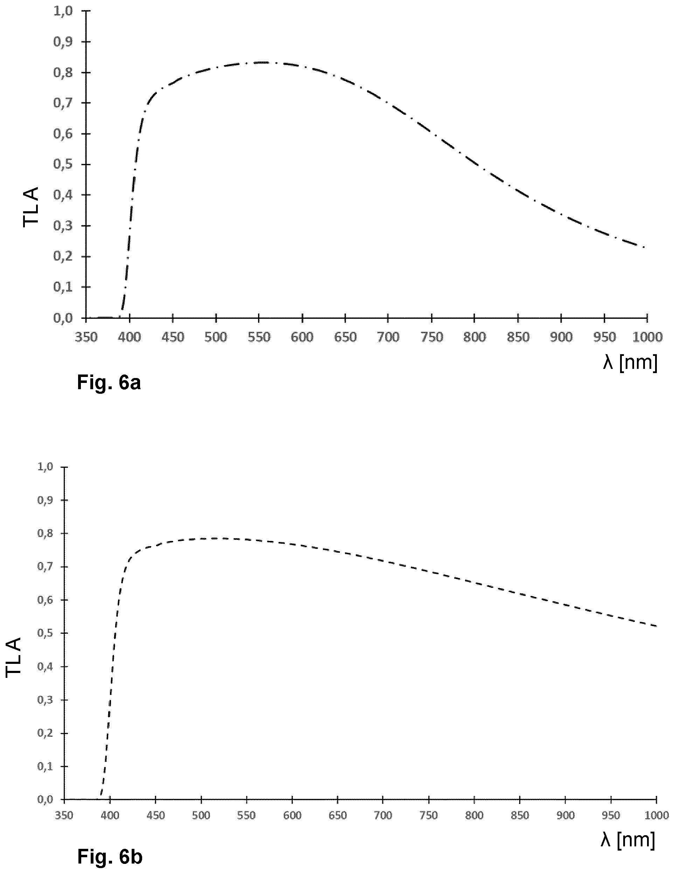

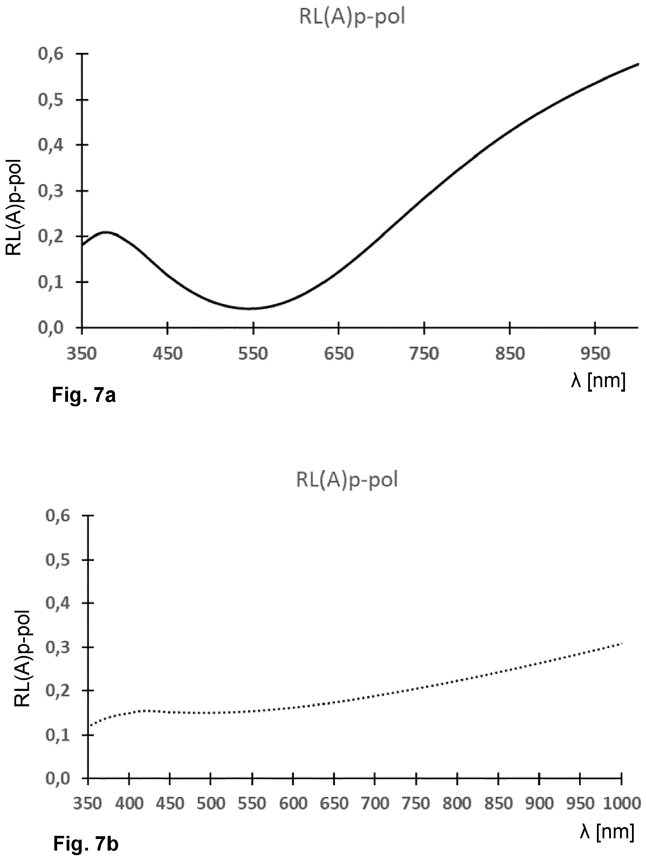

Fig. 6a zeigt ein Transmissionsspektrum der Verbundscheibe 10 mit elektrisch leitfähiger Beschichtung 20 gemäß Tabelle 1 im zweiten Flächenbereich 20.2, während Fig. 6b ein Transmissionsspektrum dieser Verbundscheibe 10 im ersten Flächenbereich 20.1 zeigt. In Fig. 7a ist ein Reflektionsspektrum der Verbundscheibe 10 gemäß Tabelle 1 im zweiten Flächenbereich 20.2 dargestellt, während in Fig. 7b das entsprechende Reflektionsspektrum im ersten Flächenbereich 20.1 gezeigt ist. Die Reflexionsspektren wurden mit einer Lichtquelle, die im betrachteten Spektralbereich p-polarisierte Strahlung gleichmäßiger Intensität ausstrahlt, aufgenommen, bei Bestrahlung über die Innenscheibe 2 (die sogenannte innenraumseitige Reflexion) unter einem Einstrahlwinkel von 65° zur innenraumseitigen Flächennormalen. Die Reflexionsmessung ist also der Situation in der Projektionsanordnung angenähert. Bereits aus der graphischen Darstellung der Spektren ist ersichtlich, dass im erfindungsgemäß für den HUD-Bereich optimierten ersten Flächenbereich 20.1 ein wesentlich glatteres Spektrum im relevanten Spektralbereich von 400 nm bis 680 nm erreicht wird. Dadurch wird eine farbneutralere Darstellung der HUD-Projektion sichergestellt.

### Bezugszeichenliste:

- 10: Verbundscheibe

- 1: Außenscheibe
- 2: Innenscheibe
- 3: thermoplastische Zwischenschicht
- 4: Projektor
- 5: Betrachter / Fahrzeugfahrer

- 20: elektrisch leitfähige Beschichtung
- 20.1: erster Flächenbereich der elektrisch leitfähigen Beschichtung
- 20.2: zweiter Flächenbereich der elektrisch leitfähigen Beschichtung
- 21a: erste elektrisch leitfähige Schicht
- 21b: zweite elektrisch leitfähige Schicht
- 22: erste dielektrische Schicht
- 22a: Entspiegelungsschicht
- 22b: Anpassungsschicht
- 22c: brechungsindexsteigernde Schicht
- 23: zweite dielektrische Schicht
- 23a: zweite Entspiegelungsschicht
- 23b: zweite Anpassungsschicht
- 23c: zweite brechungsindexsteigernde Schicht
- 24: dritte dielektrische Schicht
- 24a: dritte Entspiegelungsschicht
- 24b: dritte Anpassungsschicht
- 25: metallische Blockerschicht
- 26a: erste Bereiche eines Rasters
- 26b: zweite Bereiche eines Rasters

- O: Oberkante der Verbundscheibe 10
- U: Unterkante der Verbundscheibe 10
- B: HUD-Bereich der Verbundscheibe 10
- E: Eyebox
- Z: Ausschnitt
- I: außenseitige, von der Zwischenschicht 3 abgewandte Oberfläche der Außenscheibe 1
- II: innenraumseitige, zur Zwischenschicht 3 hingewandte Oberfläche der Außenscheibe 1
- III: außenseitige, zur Zwischenschicht 3 hingewandte Oberfläche der Innenscheibe 2
- IV: innenraumseitige, von der Zwischenschicht 3 abgewandte Oberfläche der Innenscheibe 2

## Patentansprüche

1. Projektionsanordnung für ein Head-Up-Display (HUD), mindestens umfassend
- eine Verbundscheibe (10) mit einer elektrisch leitfähigen Beschichtung (20), umfassend eine Außenscheibe (1) und eine Innenscheibe (2), die über eine thermoplastische Zwischenschicht (3) miteinander verbunden sind, und
- einen Projektor (4), der auf den HUD-Bereich (B) gerichtet ist;
wobei
- die Strahlung des Projektors (4) überwiegend p-polarisiert ist,
- die elektrisch leitfähige Beschichtung (20) einen ersten Flächenbereich (20.1) innerhalb des HUD-Bereichs (B) und einen zweiten Flächenbereich (20.2) außerhalb des HUD-Bereichs (B) aufweist,
- die elektrisch leitfähige Beschichtung (20) innerhalb des ersten Flächenbereichs (20.1) mindestens einen Teilbereich aufweist, in dem die elektrisch leitfähige Beschichtung (20) aus in dieser Reihenfolge einer ersten dielektrischen Schicht (22) oder Schichtenfolge (22a, 22b, 22c), einer ersten elektrisch leitfähigen Schicht (21a) auf Basis von Silber und einer zweiten dielektrischen Schicht (23) oder Schichtenfolge (23a, 23b, 23c) besteht und geeignet ist, p-polarisierte Strahlung zu reflektieren,
- die elektrisch leitfähige Beschichtung (20) innerhalb des zweiten Flächenbereichs (20.2) in dieser Reihenfolge mindestens eine erste dielektrische Schicht (22) oder Schichtenfolge (22a, 22b, 22c), eine erste elektrisch leitfähige Schicht (21a) auf Basis von Silber, eine zweite dielektrische Schicht (23) oder Schichtenfolge (23a, 23b, 23c), eine zweite elektrisch leitfähige Schicht (21b) auf Basis von Silber und eine dritte dielektrische Schicht (24) oder Schichtenfolge (24a, 24b, 24c) umfasst
und wobei die elektrisch leitfähige Beschichtung (20) im ersten Flächenabschnitt (20.1) innerhalb des HUD-Bereichs (B) mittels subtraktiver Verfahren aus der elektrisch leitfähigen Beschichtung (20) im zweiten Flächenabschnitt (20.2) erhältlich ist.

2. Projektionsanordnung nach Anspruch 1, wobei die elektrisch leitfähige Beschichtung (20) innerhalb des gesamten ersten Flächenbereichs (20.1) aus in dieser Reihenfolge einer ersten dielektrischen Schicht (22) oder Schichtenfolge (22a, 22b, 22c), einer elektrisch leitfähigen Schicht (21a) auf Basis von Silber und einer zweiten dielektrischen Schicht (23a) oder Schichtenfolge (23a, 23b, 23c) besteht und geeignet ist, p-polarisierte Strahlung zu reflektieren.

3. Projektionsanordnung nach Anspruch 1, wobei die elektrisch leitfähige Beschichtung (20) innerhalb des ersten Flächenbereichs (20.1) ein regelmäßiges oder unregelmäßiges Raster von ersten Bereichen (26a), in denen die elektrisch leitfähige Beschichtung (20) aus in dieser Reihenfolge einer ersten dielektrischen Schicht (22) oder Schichtenfolge (22a, 22b, 22c), einer elektrisch leitfähigen Schicht (21a) auf Basis von Silber und einer zweiten dielektrischen Schicht (23) oder Schichtenfolge (23a, 23b, 23c) besteht und geeignet ist, p-polarisierte Strahlung zu reflektieren, und von zweiten Bereichen (26b), in denen die elektrisch leitfähige Beschichtung (20) der Beschichtung (20) in zweiten Flächenbereich (20.2) entspricht, aufweist.

4. Projektionsanordnung nach einem der Ansprüche 1 bis 3, wobei die elektrisch leitfähige Beschichtung (20) im ersten Flächenbereich (20.1) mindestens einen Teilbereich aufweist, in dem die erste dielektrische Schicht (22) oder Schichtenfolge (22a, 22b, 22c) einen Brechungsindex von mindestens 1,9 und/oder die zweite dielektrische Schicht (23) oder Schichtenfolge (23a, 23b, 23c) einen Brechungsindex von mindestens 1,9 aufweist, jeweils bezogen auf eine Wellenlänge von 550 nm.

5. Projektionsanordnung nach einem der Ansprüche 1 bis 4, wobei die elektrisch leitfähige Beschichtung (20) im ersten Flächenbereich (20.1) mindestens einen Teilbereich aufweist, in dem das Verhältnis der optischen Dicke der zweiten dielektrischen Schicht (23) oder Schichtenfolge (23a, 23b, 23c) zur optischen Dicke der ersten dielektrischen Schicht (22) oder Schichtenfolge (22a, 22b, 22c) mindestens 1,7, bevorzugt mindestens 1,8, besonders bevorzugt mindestens 1,9 beträgt, jeweils bezogen auf eine Wellenlänge von 550 nm.

6. Projektionsanordnung nach einem der Ansprüche 1 bis 5, wobei die Verbundscheibe (10) mit der elektrisch leitfähigen Beschichtung (20) im HUD-Bereich (B) im Spektralbereich von 400 nm bis 680 nm einen gemittelten Reflexionsgrad gegenüber p-polarisierter Strahlung von mindestens 10%, bevorzugt von mindestens 15%, aufweist, bestimmt wie in der Beschreibung angegeben.

7. Projektionsanordnung nach einem der Anspruch 1 bis 6, wobei die elektrisch leitfähige Beschichtung (20) keine dielektrischen Schichten umfasst, deren Brechungsindex weniger als 1,9 beträgt, bezogen auf eine Wellenlänge von 550 nm.

8. Projektionsanordnung nach einem der Anspruch 1 bis 7, wobei
- unterhalb der ersten elektrisch leitfähigen Schicht (21a) eine erste dielektrische Schichtenfolge (22a, 22b) umfassend eine erste Entspiegelungsschicht (22a), bevorzugt auf Basis von Siliziumnitrid, und eine erste Anpassungsschicht (22b), bevorzugt auf Basis von Zinkoxid, angeordnet ist und die erste dielektrische Schichtenfolge (22a, 22b) einen Brechungsindex von mindestens 1,9 aufweist, bezogen auf eine Wellenlänge von 550 nm, und/oder
- oberhalb der ersten elektrisch leitfähigen Schicht (21a) eine zweite dielektrische Schichtenfolge (23a, 23b) umfassend eine zweite Entspiegelungsschicht (23a), bevorzugt auf Basis von Siliziumnitrid, und zweite Anpassungsschicht (23b), bevorzugt auf Basis von Zinkoxid, angeordnet ist und die zweite dielektrische Schichtenfolge (22a, 22b) einen Brechungsindex von mindestens 1,9 aufweist, bezogen auf eine Wellenlänge von 550 nm.

9. Projektionsanordnung nach einem der Anspruch 1 bis 8, wobei
- unterhalb der ersten elektrisch leitfähigen Schicht (21a) eine erste dielektrische Schichtenfolge (22a, 22b, 22c) umfassend eine erste Entspiegelungsschicht (22a), bevorzugt auf Basis von Siliziumnitrid, eine erste Anpassungsschicht (22b), bevorzugt auf Basis von Zinkoxid, und eine erste brechungsindexsteigernde Schicht (22c), bevorzugt auf Basis eines Silizium-Metall-Mischnitrids, insbesondere Silizium-Zirkonium-Mischnitrid, angeordnet ist und die erste dielektrische Schichtenfolge (22a, 22b, 22c) einen Brechungsindex von mindestens 1,9 aufweist, bezogen auf eine Wellenlänge von 550 nm, und/oder
- oberhalb der ersten elektrisch leitfähigen Schicht (21a) eine zweite dielektrische Schichtenfolge (23a, 23b, 23c) umfassend eine zweite Entspiegelungsschicht (23a), bevorzugt auf Basis von Siliziumnitrid, eine zweite Anpassungsschicht (23b), bevorzugt auf Basis von Zinkoxid, und eine zweite brechungsindexsteigernde Schicht (23c), bevorzugt auf Basis eines Silizium-Metall-Mischnitrids, insbesondere Silizium-Zirkonium-Mischnitrid, angeordnet ist und die zweite dielektrische Schichtenfolge (23a, 23b, 23c) einen Brechungsindex von mindestens 1,9 aufweist, bezogen auf eine Wellenlänge von 550 nm.

10. Projektionsanordnung nach einem der Anspruch 1 bis 9, wobei die elektrisch leitfähige Beschichtung (20) mindestens eine metallische Blockerschicht (25) umfasst, die oberhalb und/oder unterhalb der elektrisch leitfähigen Schichten (21a, 21b) angeordnet ist und eine geometrische Dicke von weniger als 1 nm aufweist.

11. Projektionsanordnung nach einem der Ansprüche 1 bis 10, wobei die externen Oberflächen (I, IV) der Verbundscheibe (10) im Wesentlichen parallel zueinander angeordnet sind.

12. Projektionsanordnung nach einem der Ansprüche 1 bis 11, wobei die elektrisch leitfähige Beschichtung (20) auf der zur thermoplastischen Zwischenschicht (3) hingewandten Oberfläche (II, III) der Außenscheibe (1) oder der Innenscheibe (2) oder innerhalb der Zwischenschicht (3) angeordnet ist.

13. Verfahren zur Herstellung einer Projektionsanordnung nach einem der Ansprüche 1 bis 12 wobei zumindest
a) eine Außenscheibe (1) mit einer außenseitigen Oberfläche (I) und einer innenseitigen Oberfläche (II) oder einer Innenscheibe (2) mit einer innenseitigen Oberfläche (III) und einer außenseitigen Oberfläche (IV) bereitgestellt wird,
b) eine elektrisch leitfähige Beschichtung (20) in dieser Reihenfolge mindestens umfassend eine erste dielektrische Schicht (22) oder Schichtenfolge (22a, 22b, 22c), eine erste elektrisch leitfähige Schicht (21a) auf Basis von Silber, eine zweite dielektrische Schicht (23) oder Schichtenfolge (23a, 23b, 23c), eine zweite elektrisch leitfähige Schicht (21b) auf Basis von Silber und eine dritte dielektrische Schicht (24) oder Schichtenfolge (24a, 24b, 24c) auf der innenseitigen Oberfläche (II) der Außenscheibe (1) oder der innenseitigen Oberfläche (III) der Innenscheibe (2) abgeschieden wird,
c) innerhalb eines ersten Flächenbereichs (20.1) Schichten der elektrisch leitfähigen Beschichtung (20) abgetragen werden, wobei nach Abtragung zumindest in einem Teilbereich des ersten Flächenbereichs (20.1) die elektrisch leitfähige Beschichtung (20) aus in dieser Reihenfolge einer ersten dielektrischen Schicht (22a) oder Schichtenfolge (22a, 22b, 22c), einer ersten elektrisch leitfähigen Schicht (21a) auf Basis von Silber und einer zweiten dielektrischen Schicht (23) oder Schichtenfolge (23a, 23b, 23c) besteht,
d) auf der innenseitigen Oberfläche (II) der Außenscheibe (1) oder der innenseitigen Oberfläche (III) der Innenscheibe (2) eine thermoplastische Zwischenschicht (3) aufgelegt wird und der Schichtstapel mit einer Innenscheibe (1) oder einer Außenscheibe (2) abgeschlossen wird,
e) der Schichtstapel aus zumindest Innenscheibe (2), thermoplastischer Zwischenschicht (3) und Außenscheibe (1) zu einer Verbundscheibe (1) laminiert wird,
f) ein Projektor (4), dessen Strahlung überwiegend p-polarisiert ist, bereitgestellt wird und
g) der Projektor (4) so ausgerichtet wird, dass seine Strahlung im ersten Flächenbereich (20.1) auf die elektrisch leitfähige Beschichtung (20) der Verbundscheibe (10) treffen kann.

14. Verfahren nach Anspruch 13, wobei in Schritt c) Schichten der elektrisch leitfähigen Beschichtung (20) mittels Laserverfahren abgetragen werden, bevorzugt mittels Laserablation.

15. Verwendung einer Projektionsanordnung nach einem der Ansprüche 1 bis 12 für ein Head-Up-Display eines Kraftfahrzeugs, wobei die Verbundscheibe (10) die Windschutzscheibe des Kraftfahrzeugs ist.

## Claims

1. Projection arrangement for a head-up display (HUD), at least comprising
- a laminated pane (10) having an electrically conductive coating (20), comprising an outer pane (1) and an inner pane (2), which are connected to one another via a thermoplastic intermediate layer (3), and
- a projector (4) which is directed toward the HUD region (B);
wherein
- the radiation of the projector (4) is predominantly p-polarised,
- the electrically conductive coating (20) has a first surface region (20.1) within the HUD region (B) and a second surface region (20.2) outside the HUD region (B),
- the electrically conductive coating (20) has at least one partial region within the first surface region (20.1), in which the electrically conductive coating (20) consists of, in this order, a first dielectric layer (22) or layer sequence (22a, 22b, 22c), a first electrically conductive layer (21a) based on silver, and a second dielectric layer (23) or layer sequence (23a, 23b, 23c), and is suitable for reflecting p-polarized radiation,
- the electrically conductive coating (20) within the second surface region (20.2) comprises, in this order, at least a first dielectric layer (22) or layer sequence (22a, 22b, 22c), a first electrically conductive layer (21a) based on silver, a second dielectric layer (23) or layer sequence (23a, 23b, 23c), a second electrically conductive layer (21b) based on silver, and a third dielectric layer (24) or layer sequence (24a, 24b, 24c)
and wherein the electrically conductive coating (20) in the first surface portion (20.1) within the HUD region (B) can be obtained, by means of subtractive processes, from the electrically conductive coating (20) in the second surface portion (20.2).

2. Projection arrangement according to claim 1, wherein the electrically conductive coating (20) within the entire first surface region (20.1) consists of, in this order, a first dielectric layer (22) or layer sequence (22a, 22b, 22c), an electrically conductive layer (21a) based on silver, and a second dielectric layer (23a) or layer sequence (23a, 23b, 23c), and is suitable for reflecting p-polarised radiation.

3. Projection arrangement according to claim 1, wherein the electrically conductive coating (20) within the first surface region (20.1) has a regular or irregular grid of first regions (26a), in which the electrically conductive coating (20) consists of, in this order, a first dielectric layer (22) or layer sequence (22a, 22b, 22c), an electrically conductive layer (21a) based on silver, and a second dielectric layer (23) or layer sequence (23a, 23b, 23c), and is suitable for reflecting p-polarised radiation, and of second regions (26b), in which the electrically conductive coating (20) corresponds to the coating (20) in the second surface region (20.2).

4. Projection arrangement according to any of claims 1 to 3, wherein the electrically conductive coating (20), in the first surface region (20.1), has at least one partial region, in which the first dielectric layer (22) or layer sequence (22a, 22b, 22c) has a refractive index of at least 1.9 and/or the second dielectric layer (23) or layer sequence (23a, 23b, 23c) has a refractive index of at least 1.9, in each case based on a wavelength of 550 nm.

5. Projection arrangement according to any of claims 1 to 4, wherein the electrically conductive coating (20), in the first surface region (20.1), has at least one partial region in which the ratio of the optical thickness of the second dielectric layer (23) or layer sequence (23a, 23b, 23c) to the optical thickness of the first dielectric layer (22) or layer sequence (22a, 22b, 22c) is at least 1.7, preferably at least 1.8, particularly preferably at least 1.9, in each case based on a wavelength of 550 nm.

6. Projection arrangement according to any of claims 1 to 5, wherein the laminated pane (10) having the electrically conductive coating (20) in the HUD region (B) has, in the spectral range of from 400 nm to 680 nm, an averaged reflectance with respect to p-polarised radiation of at least 10%, preferably of at least 15%, determined as stated in the description.

7. Projection arrangement according to any of claims 1 to 6, wherein the electrically conductive coating (20) does not comprise dielectric layers of which the refractive index is less than 1.9, based on a wavelength of 550 nm.

8. Projection arrangement according to any of claims 1 to 7, wherein
- a first dielectric layer sequence (22a, 22b) comprising a first anti-reflection coating (22a), preferably based on silicon nitride, and a first matching layer (22b), preferably based on zinc oxide, is arranged beneath the first electrically conductive layer (21a), and the first dielectric layer sequence (22a, 22b) has a refractive index of at least 1.9, based on a wavelength of 550 nm,
and/or
- a second dielectric layer sequence (23a, 23b) comprising a second anti-reflection coating (23a), preferably based on silicon nitride, and a second matching layer (23b), preferably based on zinc oxide, is arranged above the first electrically conductive layer (21a), and the second dielectric layer sequence (22a, 22b) has a refractive index of at least 1.9, based on a wavelength of 550 nm.

9. Projection arrangement according to any of claims 1 to 8, wherein
- a first dielectric layer sequence (22a, 22b, 22c) comprising a first anti-reflection coating (22a), preferably based on silicon nitride, a first matching layer (22b), preferably based on zinc oxide, and a first refractive index-increasing layer (22c), preferably based on a silicon-metal mixed nitride, in particular silicon-zirconium mixed nitride, is arranged below the first electrically conductive layer (21a), and the first dielectric layer sequence (22a, 22b, 22c) has a refractive index of at least 1.9, based on a wavelength of 550 nm,
and/or
- a second dielectric layer sequence (23a, 23b, 23c) comprising a second anti-reflection coating (23a), preferably based on silicon nitride, a second matching layer (23b), preferably based on zinc oxide, and a second refractive index-increasing layer (23c), preferably based on a silicon-metal mixed nitride, in particular silicon zirconium mixed nitride, is arranged above the first electrically conductive layer (21a), and the second dielectric layer sequence (23a, 23b, 23c) has a refractive index of at least 1.9, based on a wavelength of 550 nm.

10. Projection arrangement according to any of claims 1 to 9, wherein the electrically conductive coating (20) comprises at least one metal blocker layer (25) which is arranged above and/or below the electrically conductive layers (21a, 21b) and has a geometric thickness of less than 1 nm.

11. Projection arrangement according to any of claims 1 to 10, wherein the external surfaces (I, IV) of the laminated pane (10) are arranged substantially in parallel with one another.

12. Projection arrangement according to any of claims 1 to 11, wherein the electrically conductive layer (20) is arranged on the surface (II, III) facing the thermoplastic intermediate layer (3) of the outer pane (1) or of the inner pane (2) or within the intermediate layer (3).

13. Method for producing a laminated pane according to any of claims 1 to 12, wherein at least
a) an outer pane (1) having an outer-side surface (I) and an interior-side surface (II) or an inner pane (2) having an outer-side surface (III) and an interior-side surface (IV) is provided,
b) an electrically conductive coating (20) at least comprising, in this order, a first dielectric layer (22) or layer sequence (22a, 22b, 22c), a first electrically conductive layer (21a) based on silver, a second dielectric layer (23) or layer sequence (23a, 23b, 23c), a second electrically conductive layer (21b) based on silver, and a third dielectric layer (24) or layer sequence (24a, 24b, 24c) is deposited on the interior-side surface (II) of the outer pane (1) or the interior-side surface (III) of the inner pane (2),
c) layers of the electrically conductive coating (20) are removed within a first surface region (20.1), wherein after removal, at least in a partial region of the first surface region (20.1), the electrically conductive coating (20) consists of, in this order, a first dielectric layer (22a) or layer sequence (22a, 22b, 22c), a first electrically conductive layer (21a) based on silver, and a second dielectric layer (23) or layer sequence (23a, 23b, 23c),
d) a thermoplastic intermediate layer (3) is applied to the interior-side surface (II) of the outer pane (1) or the interior-side surface (III) of the inner pane (2) and the layer stack is completed by means of an inner pane (1) or an outer pane (2),
e) the layer stack consisting of at least the inner pane (2), the thermoplastic intermediate layer (3) and the outer pane (1) is laminated to form a laminated pane (1),
f) a projector (4), radiation of which is predominantly p-polarised, is provided, and
g) the projector (4) is aligned in such a way that radiation thereof can strike the electrically conductive coating (20) of the laminated pane (10) in the first surface region (20.1).

14. Method according to claim 13, wherein in step c) layers of the electrically conductive coating (20) are removed by means of a laser process, preferably by means of laser ablation.

15. Use of a projection arrangement according to any of claims 1 to 12 for a head-up display of a motor vehicle, wherein the laminated pane (10) is the windshield of the motor vehicle.

## Revendications

1. Système de projection pour un affichage tête haute (HUD), comprenant au moins
- un vitrage feuilleté (10) comportant un revêtement électriquement conducteur (20), comprenant une vitre externe (1) et une vitre interne (2) qui sont reliées entre elles par l'intermédiaire d'une couche intermédiaire (3) thermoplastique, et
- un projecteur (4) qui est dirigé vers la zone HUD (B) ;
dans lequel
- le rayonnement du projecteur (4) est principalement polarisé p,
- le revêtement électriquement conducteur (20) présente une première zone de surface (20.1) à l'intérieur de la zone HUD (B) et une seconde zone de surface (20.2) à l'extérieur de la zone HUD (B),
- le revêtement électriquement conducteur (20) présente, à l'intérieur de la première zone de surface (20.1), au moins une zone partielle dans laquelle le revêtement électriquement conducteur (20) est constitué, dans cet ordre, d'une première couche diélectrique (22) ou séquence de couches diélectriques (22a, 22b, 22c), d'une première couche électriquement conductrice (21a) à base d'argent, et d'une deuxième couche diélectrique (23) ou séquence de couches diélectriques (23a, 23b, 23c), et est apte à réfléchir un rayonnement polarisé p,
- le revêtement électriquement conducteur (20) comprend, à l'intérieur de la seconde zone de surface (20.2), dans cet ordre, au moins une première couche diélectrique (22) ou séquence de couches diélectriques (22a, 22b, 22c), une première couche électriquement conductrice (21a) à base d'argent, une deuxième couche diélectrique (23) ou séquence de couches diélectriques (23a, 23b, 23c), une seconde couche électriquement conductrice (21b) à base d'argent et une troisième couche diélectrique (24) ou séquence de couches diélectriques (24a, 24b, 24c)
et dans lequel le revêtement électriquement conducteur (20) dans la première section de surface (20.1) à l'intérieur de la zone HUD (B) peut être obtenu au moyen d'un procédé soustractif à partir du revêtement électriquement conducteur (20) dans la seconde section de surface (20.2).

2. Système de projection selon la revendication 1, dans lequel le revêtement électriquement conducteur (20) est constitué, à l'intérieur de toute la première zone de surface (20.1), dans cet ordre, d'une première couche diélectrique (22) ou séquence de couches diélectriques (22a, 22b, 22c), d'une couche électriquement conductrice (21a) à base d'argent, et d'une deuxième couche diélectrique (23a) ou séquence de couches diélectriques (23a, 23b, 23c), et est apte à réfléchir un rayonnement polarisé p.

3. Système de projection selon la revendication 1, dans lequel le revêtement électriquement conducteur (20) présente, à l'intérieur de la première zone de surface (20.1), un quadrillage régulier ou irrégulier de premières zones (26a), dans lesquelles le revêtement électriquement conducteur (20) est constitué, dans cet ordre, d'une première couche diélectrique (22) ou séquence de couches diélectriques (22a, 22b, 22c), d'une couche électriquement conductrice (21a) à base d'argent, et d'une deuxième couche diélectrique (23) ou séquence de couches diélectriques (23a, 23b, 23c), et est apte à réfléchir un rayonnement polarisé p, et de secondes zones (26b), dans lesquelles le revêtement électriquement conducteur (20) correspond au revêtement (20) dans la seconde zone de surface (20.2).

4. Système de projection selon l'une des revendications 1 à 3, dans lequel le revêtement électriquement conducteur (20) présente, dans la première zone de surface (20.1), au moins une zone partielle dans laquelle la première couche diélectrique (22) ou séquence de couches diélectriques (22a, 22b, 22c) présente un indice de réfraction d'au moins 1,9 et/ou la deuxième couche diélectrique (23) ou séquence de couches diélectriques (23a, 23b, 23c) présente un indice de réfraction d'au moins 1,9, respectivement par rapport à une longueur d'onde de 550 nm.

5. Système de projection selon l'une des revendications 1 à 4, dans lequel le revêtement électriquement conducteur (20) présente, dans la première zone de surface (20.1), au moins une zone partielle dans laquelle le rapport de l'épaisseur optique de la deuxième couche diélectrique (23) ou séquence de couches diélectriques (23a, 23b, 23c) à l'épaisseur optique de la première couche diélectrique (22) ou séquence de couches diélectriques (22a, 22b, 22c) est d'au moins 1,7, de préférence d'au moins 1,8, de manière particulièrement préférée d'au moins 1,9, respectivement par rapport à une longueur d'onde de 550 nm.

6. Système de projection selon l'une des revendications 1 à 5, dans lequel le vitrage feuilleté (10) comportant le revêtement électriquement conducteur (20) présente, dans la zone HUD (B), dans le domaine spectral allant de 400 nm à 680 nm, une réflectance moyenne par rapport au rayonnement polarisé p d'au moins 10 %, de préférence d'au moins 15 %, déterminée comme indiqué dans la description.

7. Système de projection selon l'une des revendications 1 à 6, dans lequel le revêtement électriquement conducteur (20) ne comprend pas de couches diélectriques dont l'indice de réfraction est inférieur à 1,9, par rapport à une longueur d'onde de 550 nm.

8. Système de projection selon l'une des revendications 1 à 7, dans lequel
- en dessous de la première couche électriquement conductrice (21a) est disposée une première séquence de couches diélectriques (22a, 22b) comprenant une première couche antireflet (22a), de préférence à base de nitrure de silicium, et une première couche d'adaptation (22b), de préférence à base d'oxyde de zinc, et la première séquence de couches diélectriques (22a, 22b) présente un indice de réfraction d'au moins 1,9, par rapport à une longueur d'onde de 550 nm,
et/ou
- au-dessus de la première couche électriquement conductrice (21a) est disposée une deuxième séquence de couches diélectriques (23a, 23b) comprenant une seconde couche antireflet (23a), de préférence à base de nitrure de silicium, et une seconde couche d'adaptation (23b), de préférence à base d'oxyde de zinc, et la deuxième séquence de couches diélectriques (22a, 22b) présente un indice de réfraction d'au moins 1,9, par rapport à une longueur d'onde de 550 nm.

9. Système de projection selon l'une des revendications 1 à 8, dans lequel
- en dessous de la première couche électriquement conductrice (21a) est disposée une première séquence de couches diélectriques (22a, 22b, 22c) comprenant une première couche antireflet (22a), de préférence à base de nitrure de silicium, une première couche d'adaptation (22b), de préférence à base d'oxyde de zinc, et une première couche augmentant l'indice de réfraction (22c), de préférence à base d'un nitrure mixte silicium-métal, en particulier d'un nitrure mixte silicium-zirconium, et la première séquence de couches diélectriques (22a, 22b, 22c) présente un indice de réfraction d'au moins 1,9, par rapport à une longueur d'onde de 550 nm,
et/ou
- au-dessus de la première couche électriquement conductrice (21a) est disposée une deuxième séquence de couches diélectriques (23a, 23b, 23c) comprenant une seconde couche antireflet (23a), de préférence à base de nitrure de silicium, une seconde couche d'adaptation (23b), de préférence à base d'oxyde de zinc, et une seconde couche augmentant l'indice de réfraction (23c), de préférence à base d'un nitrure mixte silicium-métal, en particulier d'un nitrure mixte silicium-zirconium, et la deuxième séquence de couches diélectriques (23a, 23b, 23c) présente un indice de réfraction d'au moins 1,9, par rapport à une longueur d'onde de 550 nm.

10. Système de projection selon l'une des revendications 1 à 9, dans lequel le revêtement électriquement conducteur (20) comprend au moins une couche de blocage métallique (25) qui est disposée au-dessus et/ou en dessous des couches électriquement conductrices (21a, 21b) et qui présente une épaisseur géométrique inférieure à 1 nm.

11. Système de projection selon l'une des revendications 1 à 10, dans lequel les surfaces (I, IV) externes du vitrage feuilleté (10) sont disposées sensiblement parallèlement l'une à l'autre.

12. Système de projection selon l'une des revendications 1 à 11, dans lequel le revêtement électriquement conducteur (20) est disposé sur la surface (II, III) de la vitre externe (1) ou de la vitre interne (2) qui est tournée vers la couche intermédiaire (3) thermoplastique, ou à l'intérieur de la couche intermédiaire (3).

13. Procédé permettant la fabrication d'un système de projection selon l'une des revendications 1 à 12, dans lequel au moins
a) une vitre externe (1) comportant une surface (I) côté externe et une surface (II) côté interne ou une vitre interne (2) comportant une surface (III) côté interne et une surface (IV) côté externe est fournie,
b) un revêtement électriquement conducteur (20) comprenant au moins, dans cet ordre, une première couche diélectrique (22) ou séquence de couches diélectriques (22a, 22b, 22c), une première couche électriquement conductrice (21a) à base d'argent, une deuxième couche diélectrique (23) ou séquence de couches diélectriques (23a, 23b, 23c), une seconde couche électriquement conductrice (21b) à base d'argent et une troisième couche diélectrique (24) ou séquence de couches diélectriques (24a, 24b, 24c) est isolé sur la surface (II) côté interne de la vitre externe (1) ou sur la surface (III) côté interne de la vitre interne (2),
c) des couches du revêtement électriquement conducteur (20) sont enlevées à l'intérieur d'une première zone de surface (20.1), dans lequel, après l'enlèvement, au moins dans une zone partielle de la première zone de surface (20.1), le revêtement électriquement conducteur (20) est constitué, dans cet ordre, d'une première couche diélectrique (22a) ou séquence de couches diélectriques (22a, 22b, 22c), d'une première couche électriquement conductrice (21a) à base d'argent, et d'une deuxième couche diélectrique (23) ou séquence de couches diélectriques (23a, 23b, 23c),
d) une couche intermédiaire (3) thermoplastique est appliquée sur la surface (II) côté interne de la vitre externe (1) ou sur la surface (III) côté interne de la vitre interne (2) et l'empilement de couches est fermé par une vitre interne (1) ou une vitre externe (2),
e) l'empilement de couches constitué au moins de la vitre interne (2), de la couche intermédiaire (3) thermoplastique et de la vitre externe (1) est laminé pour former un vitrage feuilleté (1),
f) un projecteur (4), dont le rayonnement est principalement polarisé p, est fourni et
g) le projecteur (4) est orienté de sorte que son rayonnement peut frapper le revêtement électriquement conducteur (20) du vitrage feuilleté (10) dans la première zone de surface (20.1).

14. Procédé selon la revendication 13, dans lequel, à l'étape c), des couches du revêtement électriquement conducteur (20) sont enlevées au moyen d'un procédé au laser, de préférence au moyen d'une ablation laser.

15. Utilisation d'un système de projection selon l'une des revendications 1 à 12 pour un affichage tête haute d'un véhicule automobile, dans laquelle le vitrage feuilleté (10) est le pare-brise du véhicule automobile.
